(19) Europäisches Patentamt
European Patent Office
Office européen des brevets

(11) **EP 4 779 893 A1**

(12) **EUROPEAN PATENT APPLICATION**
published in accordance with Art. 153(4) EPC

(43) Date of publication:
**22.07.2026 Bulletin 2026/30**

(21) Application number: **24871015.4**

(22) Date of filing: **27.09.2024**

(51) International Patent Classification (IPC):
***H04B 7/06*** (2006.01)

(52) Cooperative Patent Classification (CPC):
**H04B 7/06**

(86) International application number:
**PCT/CN2024/121905**

(87) International publication number:
**WO 2025/067480 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311282281**

(71) Applicant: **HUAWEI TECHNOLOGIES CO., LTD.**
**Shenzhen, Guangdong 518129 (CN)**

(72) Inventors:
• **ZHANG, Jintao**
  **Shenzhen, Guangdong 518129 (CN)**
• **LIU, Fengwei**
  **Shenzhen, Guangdong 518129 (CN)**
• **QIU, Jing**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD, APPARATUS AND SYSTEM**

(57) This application provides a communication method. The method may be applied to a device in which an encoder is disposed, or an encoder. The method includes: obtaining N pieces of channel information, where the N pieces of channel information are determined based on a reference signal in K antenna port groups, N is a positive integer, and K is a positive integer less than or equal to N; compressing the N pieces of channel information by using a first encoder, to obtain a first sequence, where the first sequence is a joint feedback quantity of the N pieces of channel information; and sending the first sequence. In the method, channel information of analog beams is jointly compressed by using an encoder and fed back, for example, the N pieces of channel information are compressed into the first sequence, thereby reducing overheads of feeding back the channel information.

```
┌──────────────┐                    ┌──────────────┐
│ Transmit end │                    │ Receive end  │
└──────┬───────┘                    └──────┬───────┘
       │                                   │
┌──────┴────────────────────────────┐      │
│ 1010: Obtain N pieces of channel   │      │
│ information, where the N pieces of │      │
│ channel information are determined │      │
│ based on a reference signal in K   │      │
│ antenna port groups, and K is a    │      │
│ positive integer less than or      │      │
│ equal to N                         │      │
└──────┬─────────────────────────────┘      │
┌──────┴────────────────────────────┐        │
│ 1020: Compress the N pieces of     │        │
│ channel information by using a     │        │
│ first encoder, to obtain a first   │        │
│ sequence                           │        │
└──────┬─────────────────────────────┘        │
       │   1030: First sequence                │
       │──────────────────────────────────────▶│
       │                         ┌──────────────┴───────────────┐
       │                         │ 1040: Decompress the first   │
       │                         │ sequence by using a first    │
       │                         │ decoder, to obtain the N     │
       │                         │ pieces of channel information│
       │                         └──────────────┬───────────────┘
       │                                        │
```

FIG. 10

## Description

This application claims priority to Chinese Patent Application No. 202311282281.X, filed with the China National Intellectual Property Administration on September 28, 2023 and entitled "COMMUNICATION METHOD, APPARATUS, AND SYSTEM", which is incorporated herein by reference in its entirety.

## TECHNICAL FIELD

This application relates to the field of communication technologies, and more specifically, to a communication method, apparatus, and system.

## BACKGROUND

In a communication system of a high frequency band, a base station (and terminals of some frequency bands) usually uses a large-scale array antenna, and a high array gain is used to resist a path loss caused by an increase of a frequency band, to improve a coverage capability. Different beamforming manners are used for different frequency bands and different array scales, for example, digital beamforming (digital beamforming, DBF), analog beamforming (analog beamforming, ABF), or hybrid beamforming (hybrid beamforming, HBF). In these beamforming manners, signal quality is better when a beam is aligned with a communication target. However, during beam selection by the base station, overheads of reporting multi-beam channel information are high, and how to reduce feedback overheads needs to be considered.

## SUMMARY

This application provides a communication method, apparatus, and system, to reduce overheads of reporting beam channel information.

According to a first aspect, a communication method is provided. The method may be applied to a device in which an encoder is disposed, that is, may be performed by the encoder, a chip used in the encoder, or a device including the encoder. The method includes: obtaining N pieces of channel information, where the N pieces of channel information are determined based on a reference signal in K antenna port groups, N is a positive integer, and K is a positive integer less than or equal to N; compressing the N pieces of channel information by using a first encoder, to obtain a first sequence, where the first sequence is a joint feedback quantity of the N pieces of channel information; and sending the first sequence.

Optionally, the K antenna port groups respectively correspond to K analog beams. In the method, channel information of analog beams is jointly compressed by using the encoder and fed back, for example, the N pieces of channel information are compressed into the first sequence, thereby reducing overheads of feeding back the channel information.

In some implementations, the first encoder corresponds to a first parameter set, and the first parameter set includes at least one of the following parameters: a value of N, joint feedback overheads X, the K antenna port groups corresponding to the N pieces of channel information, or N combination coefficient sets corresponding to the N pieces of channel information. When the first sequence is a sequence before quantization, the joint feedback overheads are a length of the first sequence; or when the first sequence is a sequence after quantization, the joint feedback overheads are a quantity of bits of the first sequence, where X is a positive integer, and K is a positive integer.

Optionally, each of the N combination coefficient sets includes K combination coefficients.

The N pieces of channel information correspond to the K antenna port groups, and the N combination coefficient sets corresponding to the N pieces of channel information, so that the first encoder can determine a correlation between the N pieces of compressed channel information, to determine at least one of a compression rate or a compression manner.

It should be understood that the first parameter set is merely used as an example of a parameter. For example, the at least one parameter may also be in a form of a parameter group. That is, the first parameter set is a first parameter group.

It should be further understood that, the quantization is an optional manner, and the first sequence may be the sequence before quantization, or may be the sequence after quantization.

In this manner, the first encoder corresponds to the first parameter set, or an encoder applicable to the first parameter set is selected to compress the channel information, to support the encoder in compressing the channel information, and improve compression efficiency.

In some implementations, the first encoder corresponds to at least one first parameter set.

To be specific, the first encoder may be configured to compress channel information corresponding to a plurality of parameter sets. In other words, the first encoder may be configured to compress a plurality of types of channel information.

In this manner, one encoder can be used to compress a plurality of types of information, to enhance a function of the encoder.

In some implementations, second information is received, where the second information indicates the first encoder.

Optionally, the second information may be an identifier of the first encoder.

In this manner, the encoder used to compress the channel information is indicated to the device in which the encoder is disposed, without performing determining by the device, thereby reducing compression complexity.

Optionally, the device may alternatively determine the used encoder.

In some implementations, a correspondence between the N pieces of channel information and the K antenna port groups is predefined or configured. In this way, a decoder may be caused to correspondingly perform a decoding output based on the correspondence.

In some implementations, the N pieces of channel information are input to the first encoder in a predefined order and/or in a stacking manner. In this way, a decoder may be caused to correspondingly perform a decoding output based on the predefined order and/or stacking manner.

In some implementations, the N pieces of channel information are arranged in a first order along a frequency domain direction in a frequency domain resource unit, for example, arranged based on indexes of frequency domain resources. Alternatively, the N pieces of channel information are arranged in a second order along a port or port group domain direction in a frequency domain resource unit, for example, arranged based on identifiers of the port groups. Alternatively, the N pieces of channel information are arranged in a third order along a beam domain in a frequency domain resource unit, for example, arranged based on identifiers of the beams.

In some implementations, the first order, the second order, and the third order are predefined or configured.

In some implementations, frequency domain resources of the K antenna port groups include one or more same subbands.

In other words, the frequency domain resources of the K antenna port groups include a common part or an overlapping part.

In some implementations, the K antenna port groups include a first antenna port group and a second antenna port group, and a slot offset of time domain resources corresponding to the first antenna port group and the second antenna port group is less than or equal to a first threshold. The first threshold may be predefined or configured.

In some implementations, the N pieces of channel information are obtained through calculation based on K pieces of channel information obtained through measurement by using the K antenna port groups, and the N combination coefficient sets. For example, each of the N pieces of channel information is obtained based on the K pieces of channel information and a combination coefficient set that includes K coefficients, that is, each of the N pieces of channel information is a function that is based on the K pieces of channel information and the combination coefficient set that includes the K coefficients. In an example, the K pieces of channel information are respectively multiplied by K coefficients in a combination coefficient set #1, to obtain channel information #1. The combination coefficient set #1 is one of the N combination coefficient sets, and the channel information #1 is one piece of the N pieces of channel information.

According to a second aspect, a communication method is provided. The method may be applied to a device in which a decoder is disposed, that is, may be performed by the decoder, a chip used in the decoder, or a device including the decoder. The method includes the following steps:

receiving a first sequence, where the first sequence is a joint feedback quantity of N pieces of channel information, the N pieces of channel information are determined based on a reference signal in K antenna port groups, N is a positive integer, and K is a positive integer less than or equal to N; and decompressing the first sequence by using a first decoder, to obtain the N pieces of channel information.

Optionally, the K antenna port groups respectively correspond to K analog beams.

In some implementations, the first decoder corresponds to a first parameter set, and the first parameter set includes at least one of the following:

a value of N, joint feedback overheads X, the K antenna port groups corresponding to the N pieces of channel information, or N combination coefficient sets corresponding to the N pieces of channel information.

The N pieces of channel information correspond to the K antenna port groups, and the N combination coefficient sets corresponding to the N pieces of channel information, so that the first encoder can determine a correlation between the N pieces of compressed channel information, to determine at least one of a compression rate or a compression manner.

When the first sequence is a sequence before quantization, the joint feedback overheads are a length of the first sequence; or when the first sequence is a sequence after quantization, the joint feedback overheads are a quantity of bits of the first sequence, where X is a positive integer, and K is a positive integer.

In some implementations, the first decoder corresponds to at least one first parameter set.

In some implementations, a correspondence between the N pieces of channel information and the K antenna port groups is predefined or configured.

In some implementations, the N pieces of channel information are output from the first decoder in a predefined order and/or in a stacking manner.

In some implementations, frequency domain resources of the K antenna port groups include one or more same subbands.

In some implementations, the K antenna port groups include a first antenna port group and a second antenna port group, and a slot offset of time domain resources corresponding to the first antenna port group and the second antenna port group is less than or equal to a first threshold. The first threshold may be predefined or configured.

In some implementations, the N pieces of channel information are obtained through calculation based on K pieces of channel information obtained through measurement by using the K antenna port groups, and the N combination coefficient sets.

For beneficial effect of the second aspect and the possible designs, refer to the related descriptions of the first aspect. Details are not described herein.

According to a third aspect, a training method is provided. The method includes: obtaining a first training dataset, where the first training dataset includes N pieces of data, the N pieces of data are determined based on a reference signal in K antenna port groups, N is a positive integer, and K is a positive integer less than or equal to N; and training a first model, where the first model includes a first submodel and a second submodel, an input of the first submodel includes first training data, an output of the first submodel is an input of the second submodel, the second submodel outputs a second training dataset, the second training dataset indicates the N pieces of data, the output of the first submodel is a first sequence, and the first sequence is a joint feedback quantity of the N pieces of data.

It should be understood that joint training of an encoder and a decoder is used as an example herein. However, this application is not limited thereto. For example, the encoder and the decoder may alternatively perform training independently.

In some implementations, the first model corresponds to a first parameter, and the first parameter includes at least one of the following: a value of N, joint feedback overheads X, the K antenna port groups corresponding to the N pieces of data, or N combination coefficient sets corresponding to the N pieces of data.

The N pieces of channel information correspond to the K antenna port groups, and the N combination coefficient sets corresponding to the N pieces of channel information, so that the first encoder can determine a correlation between the N pieces of compressed channel information, to determine at least one of a compression rate or a compression manner.

When the first sequence is a sequence before quantization, the joint feedback overheads are a length of the first sequence; or

when the first sequence is a sequence after quantization, the joint feedback overheads are a quantity of bits of the first sequence, where X is a positive integer, and K is a positive integer.

Optionally, each of the N combination coefficient sets includes K combination coefficients.

In some implementations, the first model corresponds to at least one first parameter set.

In some implementations, the first model corresponds to at least one training dataset, and the first training dataset belongs to the at least one training dataset.

That is, one training model may train a plurality of training datasets.

In some implementations, a correspondence between the N pieces of data and the K antenna port groups is predefined or configured.

In some implementations, the N pieces of data are input to the first model in a predefined order and/or in a stacking manner.

In some implementations, frequency domain resources of the K antenna port groups include one or more same subbands.

In some implementations, the K antenna port groups include a first antenna port group and a second antenna port group, and a slot offset of time domain resources corresponding to the first antenna port group and the second antenna port group is less than or equal to a first threshold.

In some implementations, the N pieces of data are functions that are based on K pieces of channel information obtained through measurement by using the K antenna port groups, and the N combination coefficient sets, and each of the N pieces of channel information is a function that is based on the K pieces of channel information and a combination coefficient set that includes K coefficients.

According to a fourth aspect, a communication apparatus is provided. The apparatus is configured to perform the method provided in the first aspect, the second aspect, or the third aspect. Specifically, the apparatus may include a unit and/or a module configured to perform the method provided in any one of the implementations of the first aspect, the second aspect, or the third aspect, for example, a processing unit and/or a communication unit.

In an implementation, the apparatus is a communication device (for example, an encoder or a decoder). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the communication device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fifth aspect, a communication apparatus is provided. The apparatus includes at least one processor, configured to execute a computer program or instructions stored in a memory, to perform the method provided in any one of the implementations of the first aspect, the second aspect, or the third aspect.

In an implementation, the apparatus is a communication device (for example, an encoder or a decoder).

In another implementation, the apparatus is a chip, a chip system, or a circuit used in the communication device.

In still another implementation, the apparatus further includes the memory, configured to store the program. Alternatively, the at least one processor includes the memory, configured to store the program.

According to a sixth aspect, this application provides a processor, configured to perform the methods according to the foregoing aspects.

Operations such as sending and obtaining/receiving related to the processor may be understood as operations such as outputting and inputting of the processor, or may be understood as sending and receiving operations performed by a radio frequency circuit and an antenna, unless otherwise specified, or provided that the operations do not contradict actual functions or internal logic of the operations in related descriptions. This is not limited in this application.

The processor may include a processing circuit and a transceiver circuit.

According to a seventh aspect, a computer-readable storage medium is provided. The computer-readable medium stores program code executed by a device, and the program code is for performing the method provided in any one of the implementations of the first aspect, the second aspect, or the third aspect.

According to an eighth aspect, a computer program product including instructions is provided. When the computer program product runs on a computer, the computer is caused to perform the method provided in any one of the implementations of the first aspect, the second aspect, or the third aspect.

According to a ninth aspect, a chip is provided. The chip includes a processor and a communication interface. The processor reads, through the communication interface, instructions stored in a memory, to perform the method provided in any one of the implementations of the first aspect or the second aspect.

Optionally, in an implementation, the chip further includes the memory, the memory stores a computer program or the instructions, and the processor is configured to execute the computer program or the instructions stored in the memory. When the computer program or the instructions are executed, the processor is configured to perform the method provided in any one of the implementations of the first aspect or the second aspect.

According to a tenth aspect, a communication system is provided, and includes an encoder and a decoder.

In this application, the encoder may also be referred to as an encoding apparatus, and may have another function other than encoding. The decoder may also be referred to as a decoding apparatus, and may have another function other than decoding.

## BRIEF DESCRIPTION OF DRAWINGS

FIG. 1 is a diagram of a possible application framework in a communication system;

FIG. 2 is a diagram of another possible application framework in a communication system;

FIG. 3 is a diagram of a communication system to which an embodiment of this application is applicable;

FIG. 4 is a diagram of another communication system to which an embodiment of this application is applicable;

FIG. 5 is a block diagram of an auto-encoder;

FIG. 6 is a diagram of an AI application framework;

FIG. 7 is a diagram of a digital beamforming architecture;

FIG. 8 is a diagram of an analog beamforming architecture;

FIG. 9 is a diagram of a hybrid beamforming architecture;

FIG. 10 is a schematic flowchart of a communication method according to an embodiment of this application;

FIG. 11(a) is a schematic flowchart of a method for determining a channel coefficient according to an embodiment of this application;

FIG. 11(b) is a schematic flowchart of another method for determining a channel coefficient according to an embodiment of this application;

FIG. 12(a), FIG. 12(b), FIG. 12(c), FIG. 12(d), and FIG. 12(e) are diagrams of several channel information stacking manners according to an embodiment of this application;

FIG. 13 is a schematic flowchart of an implementation of a communication method according to an embodiment of this application;

FIG. 14 is a schematic flowchart of a precoding matrix compression manner according to an embodiment of this application;

FIG. 15 is a schematic flowchart of a training method according to an embodiment of this application;

FIG. 16 is a schematic flowchart of a joint training method according to an embodiment of this application;

FIG. 17 is a block diagram of a communication apparatus 1700 according to an embodiment of this application;

FIG. 18 is a diagram of another communication apparatus 1800 according to an embodiment of this application; and

FIG. 19 is a diagram of a chip system 1900 according to an embodiment of this application.

## DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a system integrating a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A network element in the communication system may send a signal to another network element or receive a signal from another network element. The signal may include information, signaling, data, or the like. The network element may also be replaced with an entity, a network entity, a device, a communication device, a communication module, a node, a communication node, or the like. In this disclosure, the network element is used as an example for description. For example, the communication system may include at least one terminal device and at least one network device. The network device may send a downlink signal to the terminal device, and/or the terminal device may send an uplink signal to the network device. It may be understood that in this disclosure, the terminal device may be replaced with a first network element, the network device may be replaced with a second network element, and the terminal device and the network device perform a corresponding communication method in this disclosure.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice or data, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and devices that focus on only one type of application function and need to be used together with other devices such as smartphones, for example, various smart bands or smart jewelry for monitoring physical signs.

In embodiments of this application, an apparatus configured to implement a function of the terminal device may be the terminal device, or may be an apparatus that can support the terminal device in implementing the function, for example, a chip system, where the apparatus may be installed in the terminal device or used together with the terminal device. In embodiments of this application, the chip system may include a chip, or may include a chip and another discrete component. In embodiments of this application, an example in which the apparatus configured to implement the function of the terminal device is the terminal device is merely used for description, and constitutes no limitation on the solutions in embodiments of this application.

In embodiments of this application, the network device may be a device configured to communicate with the terminal device. The network device may also be referred to as an access network device or a radio access network device. For example, the network device may be a base station. In embodiments of this application, the network device may be a radio access network (radio access network, RAN) node (or device) that accesses the terminal device to a wireless network. The base station may cover the following various names in a broad sense, or may be replaced with the following names: for example, a NodeB (NodeB), an evolved NodeB (evolved NodeB, eNB), a next generation base station (next generation NodeB, gNB), a relay station, an access point, a transmission point (transmitting and receiving point, TRP), a transmitting point (transmitting point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a radio frequency head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In another example, a helicopter or an uncrewed aerial vehicle may be configured as a device for communicating with another base station.

In some deployments, the network device mentioned in embodiments of this application may be a device including a CU, a DU, or a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement a part of functions of the base station. For example, the RAN node may be a CU, a DU, a CU-CP, a CU-UP, an RU, or the like. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, by comparison with the CPRI, a part of downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different manners of splitting the DU and the RU correspond to eCPRIs of different categories (categories, Cats), for example, eCPRI Cats A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions (for example, one or more of resource element (resource element, RE) mapping, digital beamforming (beamforming, BF), or inverse fast Fourier transform (inverse fast Fourier transform, IFFT)/cyclic prefix (cyclic prefix, CP) addition) after the layer mapping are moved to the RU for implementation. For uplink transmission, splitting is performed at RE demapping. The DU is configured to implement demapping and one or more functions before the demapping (to be specific, one or more functions of decoding, de-rate matching, descrambling, demodulation, inverse discrete Fourier transform (inverse discrete Fourier transform, IDFT), channel equalization, and the RE demapping), and other functions (for example, one or more of digital BF or fast Fourier transform (FFT)/CP removal) after the demapping are moved to the RU for implementation. It may be understood that, for function descriptions of DUs and RUs corresponding to various categories of eCPRIs, refer to an eCPRI protocol. Details are not described herein.

In a possible design, a processing unit for implementing a baseband function in the BBU is referred to as a base band high (base band high, BBH) unit, and a processing unit for implementing a baseband function in the RRU/AAU/RRH is referred to as a base band low (base band low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or an apparatus that can support the network device in implementing the function, for example, a chip system, a hardware circuit, a software module, or a combination of a hardware circuit and a software module. The apparatus may be installed in the network device or used together with the network device. In embodiments of this application, an example in which the apparatus configured to implement the function of the network device is a network device is merely used for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network, for example, in a mobile communication network, services supported by the network are increasingly diversified, and therefore requirements that need to be met are increasingly diversified. For example, the network needs to be capable of supporting an ultra-high rate, ultra-low latency, and/or massive connections. This feature makes network planning, network configuration, and/or resource scheduling increasingly complex. In addition, because the network has increasingly powerful functions, for example, supports an increasingly high spectrum and supports new technologies such as a higher-order multiple-input multiple-output (multiple-input multiple-output, MIMO) technology, beamforming, and/or beam management, network energy saving becomes a hot research topic. These new requirements, scenarios, and features cause unprecedented challenges to network planning, operation and maintenance, and efficient operation. To address the challenges, an artificial intelligence technology may be introduced into the wireless communication network to implement network intelligence.

To support AI technologies in a wireless network, an AI node may be further introduced into the network.

Optionally, the AI node may be deployed in one or more of the following locations in the communication system: an access network device, a terminal device, a core network device, or the like. Alternatively, the AI node may be independently deployed, for example, deployed in a location other than any one of the foregoing devices, for example, a host or a cloud server in an over the top (over the top, OTT) system. The AI node may communicate with another device in the communication system. For example, the another device may be one or more of the following: a network device, a terminal device, or a network element of a core network.

It may be understood that, a quantity of AI nodes is not limited in this application. For example, when there are a plurality of AI nodes, the plurality of AI nodes may be divided based on functions. For example, different AI nodes are responsible for different functions.

It may be further understood that the AI nodes may be independent devices, or may be integrated into a same device to implement different functions, or may be network elements in a hardware device, or may be software functions running on dedicated hardware, or may be virtualized functions instantiated on a platform (for example, a cloud platform). A specific form of the AI node is not limited in this application.

The AI node may be an AI network element or an AI module.

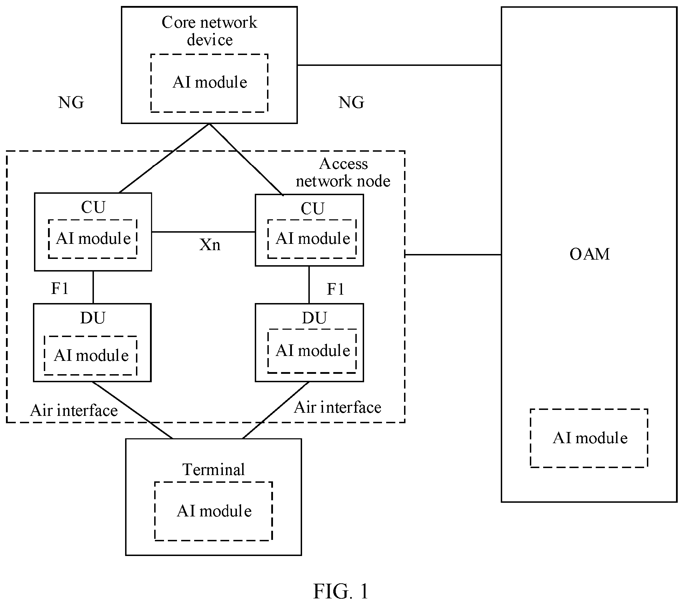

FIG. 1 is a diagram of a possible application framework in a communication system. As shown in FIG. 1, network elements in the communication system are connected through an interface (for example, NG or Xn) or an air interface. One or more AI modules (for clarity, only one AI module is shown in FIG. 1) are disposed on these network element nodes, for example, one or more of the following devices: a core network device, an access network node (RAN node), a terminal, or an OAM. The access network node may serve as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed in different nodes or devices, or may be deployed in a same node or device.

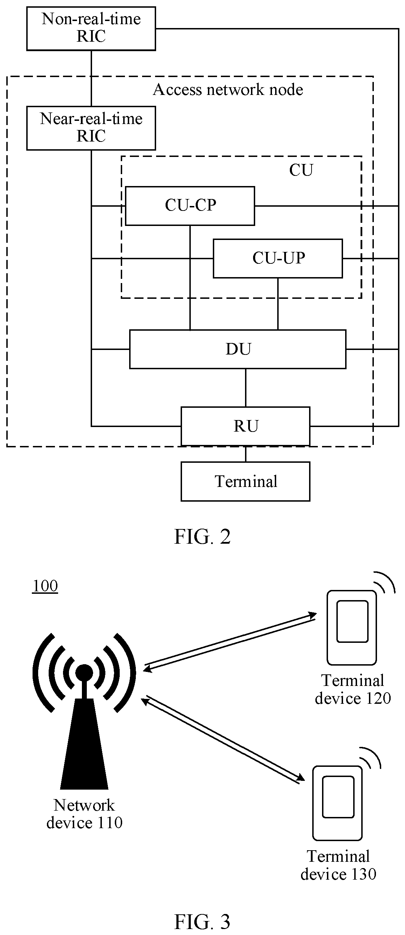

FIG. 2 is a diagram of a possible application framework in a communication system. As shown in FIG. 2, the communication system includes a RAN intelligent controller (RAN intelligent controller, RIC). For example, the RIC may be AI modules 117 and 118 shown in FIG. 1, and is configured to implement an AI-related function. The RIC includes a near-real-time RIC (near-real time RIC, near-RT RIC) and a non-real-time RIC (non-real time RIC, Non-RT RIC). The non-real-time RIC mainly processes non-real-time information, for example, latency-insensitive data. Latency of the data may be several seconds. A real-time RIC mainly processes near-real-time information, for example, latency-sensitive data. Latency of the data is tens of milliseconds.

The near-real-time RIC is used for model training and inference, for example, is configured to train an AI model and perform inference by using the AI model. The near-real-time RIC may obtain information on a network side and/or a terminal side from the RAN node (for example, a CU, a CU-CP, a CU-UP, a DU, and/or an RU) and/or the terminal. The information may be used as training data or inference data. Optionally, the near-real-time RIC may deliver an inference result to the RAN node and/or the terminal. Optionally, an inference result may be exchanged between the CU and the DU and/or between the DU and the RU. For example, the near-real-time RIC delivers an inference result to the DU, and the DU sends the inference result to the RU.

The non-real-time RIC is also used for model training and inference, for example, is configured to train an AI model and perform inference by using the model. The non-real-time RIC may obtain information on a network side and/or a terminal side from the RAN node (for example, a CU, a CU-CP, a CU-UP, a DU, and/or an RU) and/or the terminal. The information may be used as training data or inference data, and an inference result may be delivered to the RAN node and/or the terminal. Optionally, an inference result may be exchanged between the CU and the DU and/or between the DU and the RU. For example, the non-real-time RIC delivers an inference result to the DU, and the DU sends the inference result to the RU.

The near-real-time RIC and the non-real-time RIC each may alternatively be independently disposed as a network element. Optionally, the near-real-time RIC and the non-real-time RIC may alternatively serve as a part of another device. For example, the near-real-time RIC is disposed on the RAN node (for example, the CU or the DU), and the non-real-time RIC is disposed on an OAM, a cloud server, a core network device, or another network device.

FIG. 3 is a diagram of a communication system to which a communication method according to an embodiment of this application is applicable. As shown in FIG. 3, the communication system 100 may include at least one network device, for example, a network device 110 shown in FIG. 3. The communication system 100 may further include at least one terminal device, for example, a terminal device 120 and a terminal device 130 shown in FIG. 3. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

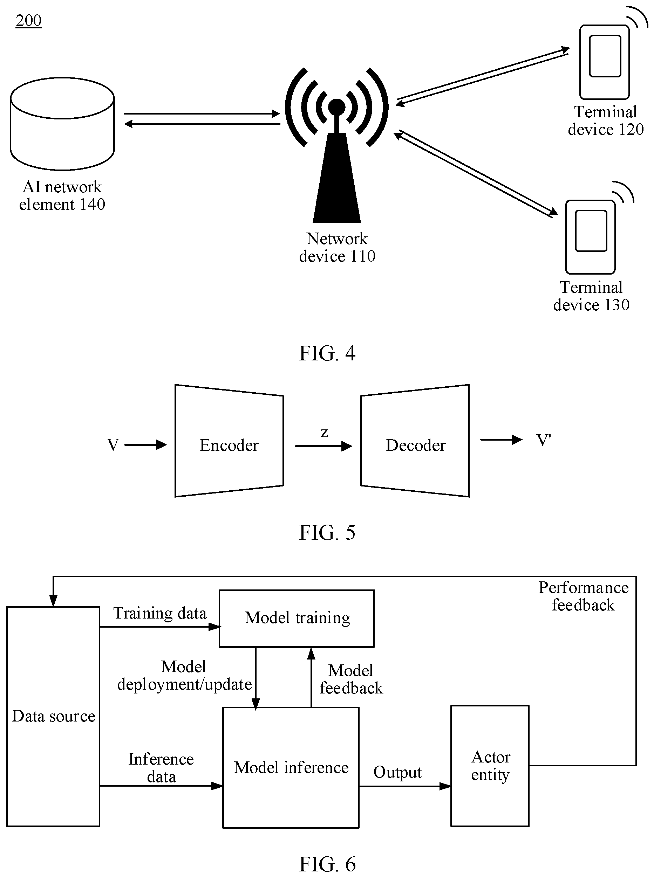

FIG. 4 is a diagram of another communication system to which a communication method according to an embodiment of this application is applicable. Compared with the communication system 100 shown in FIG. 3, the communication system 200 shown in FIG. 4 further includes an AI network element 140. The AI network element 140 is configured to perform an AI-related operation, for example, constructing a training dataset or training an AI model.

In a possible implementation, the network device 110 may send data related to training of the AI model to the AI network element 140, and the AI network element 140 constructs the training dataset and trains the AI model. For example, the data related to training of the AI model may include data reported by the terminal device. The AI network element 140 may send a result of an operation related to the AI model to the network device 110, and the network device 110 forwards the result of the operation related to the AI model to the terminal device. For example, the result of the operation related to the AI model may include at least one of the following: a trained AI model, an evaluation result or a test result for the model, and the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

It should be understood that, in FIG. 4, that the AI network element 140 is directly connected to the network device 110 is used merely as an example for description. In another scenario, the AI network element 140 may alternatively be connected to the terminal device. Alternatively, the AI network element 140 may be connected to both the network device 110 and the terminal device. Alternatively, the AI network element 140 may be connected to the network device 110 via a third-party network element. A connection relationship between the AI network element and another network element is not limited in embodiments of this application.

The AI network element 140 may alternatively be disposed on a network device and/or a terminal device as a module, for example, disposed on the network device 110 or the terminal device shown in FIG. 3.

It should be noted that, FIG. 3 and FIG. 4 are merely simplified diagrams of examples for ease of understanding. For example, the communication system may further include another device, for example, may further include a wireless relay device and/or a wireless backhaul device, which are/is not shown in FIG. 3 and FIG. 4. During actual application, the communication system may include a plurality of network devices, and may also include a plurality of terminal devices. Quantities of network devices and terminal devices included in the communication system are not limited in embodiments of this application.

For ease of understanding the solutions in embodiments of this application, the following describes terms that may be used in embodiments of this application.

1. Artificial intelligence: enables machines to learn and accumulate experience, to resolve problems such as natural language understanding, image recognition, and chess playing that can be resolved by humans through experience. The artificial intelligence may be understood as intelligence represented by machines manufactured by people. Usually, the artificial intelligence is a technology that presents human intelligence by using a computer program. An objective of the artificial intelligence includes understanding intelligence by building symbolic reasoning or computer programs for reasoning.

2. Machine learning (machine learning): is an implementation of artificial intelligence. The machine learning is a method of enabling machines to learn, so that the machines can complete functions that cannot be completed through direct programming. In practice, the machine learning is a method of training a model by using data and then performing prediction by using the model. There are many machine learning methods, such as a neural network (neural network, NN), a decision tree, and a support vector machine. A machine learning theory is mainly to design and analyze some algorithms that enable computers to learn automatically. A machine learning algorithm is an algorithm that automatically analyzes data to obtain a rule and uses the rule to predict unknown data.

3. Neural network: is a specific embodiment of a machine learning method. The neural network is a mathematical model that imitates animal neural network behavior features for information processing. The idea of the neural network is from a neuron structure of brain tissue. Each neuron may perform a weighted summation operation on input values of the neuron, and generates output based on a result of the weighted summation operation by using an activation function.

The neural network usually includes a plurality of layers of structures, and each layer may include one or more logical determining units. The logical determining unit may be referred to as a neuron (neuron). An expression capability of the neural network may be improved by increasing a depth and/or a width of the neural network, to provide more powerful information extraction and abstraction modeling capabilities for a complex system. The depth of the neural network may be understood as a quantity of layers included in the neural network, and a quantity of neurons included in each layer may be referred to as a width of the layer. In a possible implementation, the neural network includes an input layer and an output layer. After performing neuron processing on a received input, the input layer of the neural network transfers a result to the output layer, and the output layer obtains an output result of the neural network. In another possible implementation, the neural network includes an input layer, a hidden layer, and an output layer. The input layer of the neural network processes a received input through a neuron, and then transfers a result to the intermediate hidden layer. The hidden layer transfers a computation result to the output layer or an adjacent hidden layer. Finally, the output layer obtains an output result of the neural network. One neural network may include one hidden layer or a plurality of sequentially connected hidden layers. This is not limited.

A loss function may be defined in a process of training the neural network. The loss function is used to measure a difference between a predicted value and an actual value of the model. In a process of training the neural network, the loss function describes a gap or a difference between an output value and an ideal target value of the neural network. The process of training the neural network is a process of adjusting a neural network parameter, so that a value of the loss function is less than a threshold or meets a target requirement. The neural network parameter may include at least one of the following: the quantity of layers of the neural network, the width of the neural network, a weight of a neuron, or a parameter in an activation function of the neuron.

For example, a type of an AI model is a neural network. The AI model in this disclosure may be a deep neural network (deep neural network, DNN). Based on a network construction manner, the DNN may include a feedforward neural network (feedforward neural network, FNN), a convolutional neural network (convolutional neural network, CNN), a recurrent neural network (recurrent neural network, RNN), and the like.

4. Deep neural network (deep neural network): It is a neural network having a plurality of hidden layers.

5. Deep learning (deep learning): It is machine learning performed based on a deep neural network.

6. AI model:
the AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

7. Two-side model:
the two-side model may also be referred to as a bilateral model, a cooperative model, a dual model, a two-side (two-side) model, or the like. The two-side model is a model including a plurality of submodels. The plurality of submodels included in the model need to match each other. The plurality of submodels may be deployed on different nodes.

Embodiments of this application relate to an encoder for compressing CSI and a decoder for recovering compressed CSI. The encoder and the decoder are used together. It can be understood that the encoder and the decoder are AI models that match each other. One encoder may include one or more AI models, and a decoder matching the encoder also includes one or more AI models. An encoder and a decoder that are used together include a same quantity of AI models, and AI models included in the encoder are in one-to-one correspondence with AI models included in the decoder.

In a possible design, a set of encoder (encoder) and decoder (decoder) that are used together may be specifically two parts of a same auto-encoder (auto-encoder, AE), for example, as shown in FIG. 5. An AE model in which an encoder and a decoder are separately deployed on different nodes is a typical bilateral model. The encoder and the decoder of the AE model are usually an encoder and a decoder that are jointly trained and that are used together. The encoder processes an input V to obtain a processed result z, and the decoder can decode the output z of the encoder into an expected output V'.

The auto-encoder is an unsupervised learning neural network, and is characterized by using input data as label data. Therefore, the auto-encoder may also be understood as a self-supervised learning neural network. The auto-encoder may be configured to compress and restore data. For example, the encoder in the auto-encoder may compress (encode) data A to obtain data B, and the decoder in the auto-encoder may decompress (decode) the data B to obtain the data A through recovery. Alternatively, this may be understood as that the decoder is an inverse operation of the encoder.

For example, the AI model in embodiments of this application may include an encoder and a decoder. The encoder and the decoder are used together. It can be understood that the encoder and the decoder are AI models that match each other. The encoder and the decoder may be separately deployed on a terminal device and a network device.

Alternatively, the AI model in embodiments of this application may be a single-side model, and the AI model may be deployed on a terminal device or a network device.

8. Training dataset and inference data:
in the machine learning field, a ground truth (ground truth) is usually considered as accurate data or true data.

The training dataset is used for training an AI model. The training dataset may include an input of the AI model, or include an input of the AI model and a target output of the AI model. The training dataset includes one or more pieces of training data. The training data may include a training sample input to the AI model, or may include the target output of the AI model. The target output may also be referred to as a label, a sample label, or a label sample. The label is a ground truth.

In the communication field, the training dataset may include simulation data collected by a simulation platform, or may include experimental data collected in an experiment scenario, or may include actual measurement data collected in an actual communication network. Because geographical environments and channel conditions in which data is generated are different, for example, indoor/outdoor environments, moving speeds, frequency bands, or antenna configurations are different, collected data may be classified when the data is obtained. For example, data with a same channel propagation environment and a same antenna configuration is classified into one type.

Model training is essentially learning some features of training data from the training data. During training of an AI model (for example, a neural network model), because an output of the AI model is expected to be close, as much as possible, to a predicted value that is actually expected, a predicted value of a current network may be compared with a target value that is actually expected, and then a weight vector of each layer of the AI model is updated based on a difference between the predicted value and the target value (certainly, before the 1st update, an initialization process is usually performed, to be specific, parameters are preconfigured for all layers of the AI model). For example, if the predicted value of the network is large, the weight vector is adjusted to decrease the predicted value, and adjustment is continuously performed until the AI model can obtain, through prediction, the target value that is actually expected or a value that is quite close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A larger output value (loss) of the loss function indicates a greater difference. In this case, the training of the AI model is a process of minimizing the loss, to make a value of the loss function be less than a threshold, or make a value of the loss function meet a target requirement. For example, the AI model is a neural network, and adjusting a model parameter of the neural network includes adjusting at least one of the following parameters: a quantity of layers of the neural network, a width of the neural network, a weight of a neuron, or a parameter in an activation function of a neuron.

The inference data may be used as an input for a trained AI model and used for inference by the AI model. During model inference, the inference data is input to the AI model, and a corresponding output, namely, an inference result, can be obtained.

9. AI model design:

the AI model design mainly includes a data collection phase (for example, collection of training data and/or inference data), a model training phase, and a model inference phase. Further, an inference result application phase may also be included.

FIG. 6 shows an AI application framework.

In the foregoing data collection phase, a data source (data source) is used to provide a training dataset and inference data. In the model training phase, an AI model is obtained through analysis or training based on training data (training data) provided by the data source. The AI model represents a mapping relationship between an input and an output of the model. Obtaining the AI model through learning by using a model training node is equivalent to obtaining the mapping relationship between the input and the output of the model through learning by using the training data. In the model inference phase, the AI model obtained through training in the model training phase is used for performing inference based on the inference data provided by the data source, to obtain an inference result. This phase may also be understood as inputting the inference data to the AI model and obtaining an output through the AI model, where the output is the inference result. The inference result may indicate a configuration parameter used (acted) by an execution object, and/or an operation performed by the execution object. The inference result is published in the inference result application phase. For example, the inference result may be planned by an actor (actor) entity in a unified manner. For example, the actor entity may send the inference result to one or more actor objects (for example, a network device or a terminal device) for execution. For another example, the actor entity may further feed back performance of the model to the data source, to facilitate subsequent implementation of model updating and training.

It may be understood that, a communication system may include a network element having an artificial intelligence function. The foregoing phases related to the AI model design may be performed by one or more network elements with the artificial intelligence function. In a possible design, the AI function (for example, an AI module or an AI entity) may be configured in an existing network element in the communication system, to implement an AI-related operation, for example, AI model training and/or inference. For example, the existing network element may be a network device or a terminal device. Alternatively, in another possible design, an independent network element may be introduced into the communication system to perform an AI-related operation, for example, AI model training. The independent network element may be referred to as an AI network element, an AI node, or the like. The name is not limited in embodiments of this application. For example, the AI network element may be directly connected to a network device in the communication system, or may be indirectly connected to the network device via a third-party network element. The third-party network element may be a core network element like an authentication management function (authentication management function, AMF) network element or a user plane function (user plane function, UPF) network element, an operation administration and maintenance (operation administration and maintenance, OAM), a cloud server, or another network element. This is not limited. For example, the independent network element may be deployed on one or more of a network device side, a terminal device side, or a core network side. Optionally, the independent network element may be deployed on a cloud server. For example, the AI network element 140 is introduced into the communication system shown in FIG. 4.

Training processes of different models may be deployed on different devices or nodes, or may be deployed on a same device or node. Inference processes of different models may be deployed on different devices or nodes, or may be deployed on a same device or node. For example, a model training phase is completed by a terminal device. After training an encoder and a decoder that match each other, the terminal device may send a model parameter of the decoder to a network device. For example, a model training phase is completed by a network device. After training an encoder and a decoder that match each other, the network device may indicate a model parameter of the encoder to a terminal device. For example, a model training phase is completed by an independent AI network element. After training an encoder and a decoder that match each other, the AI network element may send a model parameter of the encoder to a terminal device, and send a model parameter of the decoder to a network device. Then a model inference phase corresponding to the encoder is performed on the terminal device, and a model inference phase corresponding to the decoder is performed on the network device.

The model parameter may include one or more of the following: a structure parameter of the model (for example, a quantity of layers of the model and/or a weight), an input parameter of the model (for example, an input dimension or a quantity of input ports), or an output parameter of the model (for example, an output dimension or a quantity of output ports). It may be understood that, the input dimension may be a size of one piece of input data. For example, when the input data is a sequence, an input dimension corresponding to the sequence may indicate a length of the sequence. The quantity of the input ports may be a quantity of pieces of the input data. Similarly, the output dimension may be a size of one piece of output data. For example, when the output data is a sequence, an output dimension corresponding to the sequence may indicate a length of the sequence. The quantity of the output ports may be a quantity of pieces of the output data.

10. Model training: The model training is a process of training a model parameter by selecting an appropriate loss function and using an optimization algorithm, so that a value of the loss function is less than a threshold, or a value of the loss function meets a target requirement.

11. Model application: The model application is to resolve a practical problem by using a trained model.

12. Channel state information:

in a communication system (for example, an LTE communication system or an NR communication system), a network device needs to determine, based on CSI, configurations such as a resource, an MCS, and precoding that are used to schedule a downlink data channel for a terminal device. It may be understood that, the CSI is channel information, and is information that can reflect a channel feature or channel quality.

CSI measurement means that a receive end obtains channel information based on a reference signal sent by a transmit end, that is, estimates the channel information by using a channel estimation method. For example, the reference signal may include one or more of a channel state information reference signal (channel state information reference signal, CSI-RS), a synchronization signal/broadcast channel block (synchronization signal/physical broadcast channel block, SSB), a channel sounding reference signal (sounding reference signal, SRS), a demodulation reference signal (demodulation reference signal, DMRS), and the like. The CSI-RS, the SSB, the DMRS, and the like may be used for measuring downlink CSI. The SRS, the DMRS, and the like may be used for measuring uplink CSI.

An FDD communication scenario is used as an example. In the FDD communication scenario, an uplink channel and a downlink channel are not reciprocal, in other words, reciprocity between the uplink channel and the downlink channel cannot be ensured. Therefore, the network device usually sends a downlink reference signal to the terminal device, and the terminal device performs channel measurement or interference measurement based on the received downlink reference signal to estimate downlink CSI. The terminal device generates a CSI report in a manner predefined in a protocol or in a manner configured by the network device, and feeds back the CSI report to the network device, so that the network device obtains the downlink CSI.

For example, the CSI may include at least one of the following: a channel quality indicator (channel quality indicator, CQI), a precoding matrix indicator (precoding matrix indicator, PMI), a rank indicator (rank indicator, RI), a CSI-RS resource indicator (CSI-RS resource indicator, CRI), a layer indicator (layer indicator, LI), reference signal received power (reference signal received power, RSRP), a signal to interference plus noise ratio (signal to interference plus noise ratio, SINR), or the like. The signal to interference plus noise ratio may also be referred to as a signal-to-interference-plus-noise ratio.

The RI indicates a quantity, recommended by the terminal device, of layers of downlink transmission. The CQI indicates a modulation and coding scheme that is determined by the terminal device and that can be supported in a current channel condition. The PMI indicates precoding recommended by the terminal device. A quantity, indicated by the PMI, of layers of the precoding corresponds to the RI.

It should be understood that, the RI, the CQI, the PMI, and the like that are indicated in the CSI report are merely recommended values of the terminal device. The network device may perform downlink transmission based on a part or all of information indicated in the CSI report. Alternatively, the network device may perform downlink transmission without referring to the information indicated in the CSI report.

An AI technology is introduced into a wireless communication network to obtain an AI model-based CSI feedback manner. The terminal device compresses and feeds back CSI by using an AI model, and the network device recovers compressed CSI by using an AI model. A sequence (for example, a bit sequence) is transmitted in AI-based CSI feedback, and overheads are lower than overheads of CSI in conventional CSI feedback.

FIG. 5 is used as an example. In FIG. 5, an encoder may be a CSI generator, and a decoder may be a CSI reconstructor. The encoder may be deployed on the terminal device, and the decoder may be deployed on the network device. The terminal device may generate CSI feedback information z based on CSI raw information V by using the encoder. The terminal device reports a CSI report, where the CSI report may include the CSI feedback information z. The network device may reconstruct CSI information by using the decoder to obtain CSI recovery information V'.

The CSI raw information V may be obtained by the terminal device through CSI measurement. For example, the CSI raw information V may include a channel response of a downlink channel or an eigenvector matrix (a matrix including eigenvectors) of a downlink channel. The encoder processes the eigenvector matrix of the downlink channel to obtain the CSI feedback information z. In other words, performing a compression operation and/or a quantization operation on an eigenmatrix based on a codebook in a related solution is replaced with the operation of processing the eigenmatrix by the encoder to obtain the CSI feedback information z. The terminal device reports the CSI feedback information z. The network device processes the CSI feedback information z by using the decoder to obtain the CSI recovery information V'.

The following further describes examples of a training process and an inference process for the AI model in embodiments of this application.

Training data for training the AI model includes a training sample and a sample label. For example, the training sample is channel information determined by the terminal device, and the sample label is real channel information, namely, ground truth CSI. When the encoder and the decoder belong to a same auto-encoder, the training data may include only the training sample, in other words, the training sample is the sample label.

In the wireless communication field, the ground truth CSI may be high-precision CSI.

A specific training process is as follows: A model training node processes channel information, namely, the training sample, by using the encoder, to obtain CSI feedback information; processes the feedback information by using the decoder, to obtain recovered channel information, namely, CSI recovery information; and then calculates a difference between the CSI recovery information and a corresponding sample label, that is, a value of a loss function, and updates parameters of the encoder and the decoder based on the value of the loss function, to minimize the difference between the recovered channel information and the corresponding sample label, that is, minimize the loss function. For example, the loss function may be a smallest mean square error (mean square error, MSE) or a cosine similarity. The foregoing operations may be repeated to obtain an encoder and a decoder that meet a target requirement. The model training node may be the terminal device, the network device, or another network element with an AI function in the communication system.

It should be understood that the foregoing example in which the AI model is used for CSI compression is merely used for description, and during CSI feedback, the AI model may alternatively be used in another scenario. For example, the AI model may be used for CSI prediction, to be specific, predicting channel information at one or more future moments based on channel information measured at one or more historical moments. A specific purpose of the AI model in the CSI feedback scenario is not limited in embodiments of this application.

13. Antenna port: The antenna port is a logical concept, and there is no direct correspondence between an antenna port and a physical antenna. The antenna port is usually associated with a reference signal, and a meaning of the antenna port may be understood as a transceiver interface on a channel through which the reference signal passes. For a low frequency, one antenna port may correspond to one or more antenna array elements, and these array elements jointly send the reference signal. A receive end may consider the array elements s as a whole, without distinguishing between the array elements. For a high frequency system, one antenna port group may correspond to one beam. Similarly, the receive end only needs to consider the beam as an interface, without distinguish between all array elements. One antenna port group may include one or more antenna ports.

14. Port group: The port group refers to an antenna port group/a reference signal port group. One port group may include one or more antenna ports, and one port group may correspond to a plurality of reference signals. In this application, a base station may measure channel information of one analog beam by using one or more reference signal port groups. For example, channel information of N analog beams may be obtained by measuring a reference signal in K antenna port groups, where N is a positive integer, and K is a positive integer less than or equal to N. For example, channel information of eight analog beams may be obtained by measuring reference signals in four antenna port groups, for example, is a function that is based on four pieces of channel information obtained by measuring the reference signals in the four antenna port groups, and one of eight combination coefficient sets related to the four pieces of channel information, where each combination coefficient set includes four coefficients.

15. Beam (beam): The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent by different beams. Optionally, a plurality of beams having a same or similar communication feature may be considered as one beam. One beam may include one or more antenna ports, configured to transmit a data channel, a control channel, a sounding signal, and the like. For example, a transmit beam may be distribution of signal strength formed in different directions in space after a signal is transmitted through an antenna, and a receive beam may be distribution of signal strength, in different directions in space, of a radio signal received from an antenna. It may be understood that one or more antenna ports forming one beam may also be considered as one antenna port set. The beam may alternatively be embodied as a spatial parameter in a protocol, for example, a spatial filter (spatial filter).

16. Reference signal: According to a long term evolution LTE protocol/an NR protocol, at a physical layer, uplink communication includes transmission of an uplink physical channel and an uplink signal. The uplink physical channel includes a random access channel (physical random access channel, PRACH), an uplink control channel (physical uplink control channel, PUCCH), an uplink data channel (physical uplink shared channel, PUSCH), and the like. The uplink signal includes a channel sounding signal SRS, an uplink control channel demodulation reference signal (PUCCH demodulation reference signal, PUCCH-DMRS), an uplink data channel demodulation reference signal PUSCH-DMRS, an uplink phase noise tracking signal (phase noise tracking reference signal, PTRS), an uplink positioning signal (uplink positioning RS), and the like. Downlink communication includes transmission of a physical downlink channel and a downlink signal. The downlink physical channel includes a broadcast channel (physical broadcast channel, PBCH), a downlink control channel (physical downlink control channel, PDCCH), a downlink data channel (physical downlink shared channel, PDSCH), and the like. The downlink signal includes a primary synchronization signal (primary synchronization signal, PSS for short)/secondary synchronization signal (secondary synchronization signal, SSS), a downlink control channel demodulation reference signal PDCCH-DMRS, a downlink data channel demodulation reference signal PDSCH-DMRS, a phase noise tracking signal PTRS, a channel state information reference signal (channel status information reference signal, CSI-RS), a cell signal (Cell reference signal, CRS) (not available in NR), a fine synchronization signal (time/frequency tracking reference signal, TRS) (not available in LTE), an LTE/NR positioning signal (positioning RS), and the like.

17. Precoding and codebook: A multiple input multiple output (Multiple Input Multiple Output, MIMO) technology is used to increase a system capacity and a throughput. A mathematical expression is $y = Hx + n$, where y is a receive signal, H is a MIMO channel, x is a transmit signal, and n is noise. In a communication system with a plurality of antennas, signals of a plurality of transmit antennas are superimposed on any receive antenna. Consequently, a method for sending a signal by a transmit end affects system performance, and it is usually complex to restore the sent signal at a receive end. In this context, the precoding (Precoding) is used to reduce system overheads and maximize the system capacity of the MIMO, and to reduce implementation complexity of a receiver in eliminating inter-channel impact. In this case, a mathematical expression is $y = HPx + n$, where P is a precoding matrix (or vector). To simplify the implementation complexity, P may be selected from a predefined matrix (or vector) set. The set is referred to as a codebook (Codebook). The method is also referred to as a codebook-based sending method. If the transmit end can learn of all information of H, P may be obtained autonomously at the transmit end. The method is also referred to as a non-codebook (Non-codebook, NCB) sending method.

It should be understood that, in this application, the indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined only based on the information C, and also includes that the information D is determined based on the information C and other information. In addition, that information C is used to determine information D may further include an indirect determining case. For example, the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. The information may undergo necessary processing, for example, a format change, between the source end for sending the information and the destination end. However, the destination end may understand valid information from the source end. Similar descriptions in this application may be understood similarly. Details are not described herein.

For example, the network device may be one or more devices of the core network device, the access network node (RAN node), or the OAM shown in FIG. 1. For example, an AI module may be the RIC shown in FIG. 2, for example, the near-real-time RIC or the non-real-time RIC. For example, the near-real-time RIC is disposed on the RAN node (for example, a CU or a DU), and the non-real-time RIC is disposed on the OAM, the cloud server, the core network device, or another network device. The RIC may obtain, from the RAN node (for example, the CU, a CU-CP, a CU-UP, the DU, and/or an RU), subsets from a plurality of terminal devices, reassemble the subsets into a training dataset #2, and perform training based on the training dataset #2.

For example, the near-real-time RIC and the non-real-time RIC each may alternatively be independently disposed as a network element, and the network device may be the near-real-time RIC or the non-real-time RIC.

Currently, in a communication system of a high frequency band, the network device (and terminals of some frequency bands) usually uses a large-scale array antenna (for example, including 500 to 1000 antenna units), and a high array gain is used to resist a path loss caused by an increase of a frequency band, to improve a coverage capability. From a perspective of an implementation of the network device, in terms of a large array, array weighting manners (that is, different beamforming manners) used for different frequency bands and different array scales are roughly classified into the following three types according to beamforming implementation solutions.

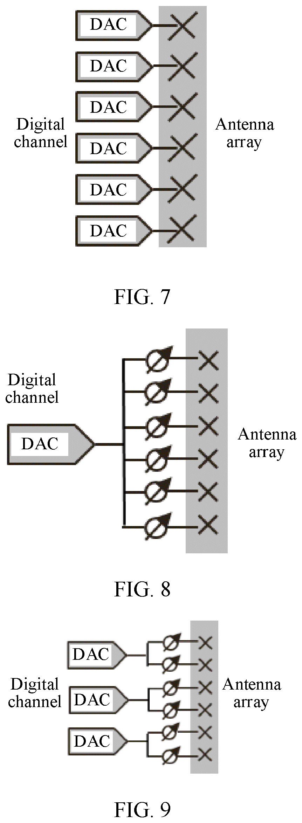

A first type is digital beamforming (Digital beamforming, DBF) whose basic structure is shown in FIG. 7, where each antenna unit or each group of antenna units are directly connected to a digital channel. Each antenna signal is directly converted to a digital domain, and subsequent array weighting is performed in digital domain. Therefore, this is referred to as digital beamforming. In digital domain, signal processing has a high degree of freedom, and a complex signal processing manner can be supported. Therefore, a DBF architecture has good performance in a same array scale. In addition, because power consumption and costs of a digital-to-analog converter/an analog-to-digital (ADC/DAC) are high (especially in large bandwidth), costs of the DBF are high in a same array scale.

A second type is analog beamforming (Analog beamforming, ABF) whose structure is shown in FIG. 8, where each antenna unit or each group of antenna units are connected to an analog phase shifter, and a plurality of antenna units are combined in analog domain and then pass through one digital-to-analog/analog-to-digital converter. In comparison with the DBF, in the ABF, an entire array corresponds to only one digital-to-analog/analog-to-digital converter. An ABF architecture has advantages in low costs and power consumption. However, a beam direction after beamforming is determined due to a setting of the phase shifter in analog domain. Because electrical signals are directly combined in analog domain, and weighting cannot be performed through digital signal processing as in the DBF, in the ABF, the setting of the phase shifter needs to be pre-configured (that is, an analog beam is pointed to a target terminal) during receiving and sending. This process needs to be completed through beam sweeping in a link establishment phase, causing extra latency. In addition, once the analog beam is not aligned due to blocking or movement, link quality of a system may be rapidly degraded or even a link is interrupted. Therefore, communication reliability of the ABF may be not as good as that of the DBF.

A third type is hybrid beamforming (Hybrid beamforming, HBF) whose structure is shown in FIG. 9, which is an intermediate form between ABF and DBF, where three channels are used as an example in the figure, and each channel corresponds to an HBF architecture with two analog phase shifters. In the HBF, there are a specific quantity of digital ports to support the digital beamforming, and each digital port drives one ABF subarray. In comparison with the ABF, in a same array scale, each digital channel drives a smaller analog subarray. Therefore, a beam is wider, reliability is better, and beam sweeping overheads are smaller. In the HBF, a ratio of digital ports to analog phase shifters is configured differently with different frequencies and system design requirements. For example, in a high frequency band, a quantity (4 to 16) of digital ports is very small, a single digital channel corresponds to a relatively large quantity of analog phase shifters (16 to 32), which therefore is more similar to the ABF; and in a low frequency-band system, there are a relatively large quantity of digital ports (32 to 128), and there are fewer analog phase shifters (for example, 2 to 10) for a single digital channel.

Both HBF and ABF architectures have analog beams, and signal quality is better only when a beam is aligned with a communication target. A direction (determined by a beam weight) of the analog beam is configured before receiving and sending. For a terminal, a process in which a network device selects an analog beam is referred to as beam training or beam sweeping. In the beam sweeping, the network device usually sends reference signals by using different analog beam weights, and the terminal separately measures the reference signals and feeds back a measurement result to assist the network device in determining a specific beam with best quality. Currently, the terminal performs independent measurement and channel information feedback only for a single CSI-RS resource set, or a plurality of CSI-RS resources or a plurality of CSI-RS resource sets in a single analog beam, and overheads are high. In addition, coverage areas of a plurality of analog beams overlap to some extent, and channel information between different analog beams has a specific correlation and a specific common feature. Beam-by-beam independent measurement and reporting cause a plurality of times of reporting of common information, causing multiplied feedback overheads.

In view of this, embodiments of this application provide a communication method, to reduce feedback overheads of a terminal.

The following describes, in detail with reference to the accompanying drawings, the communication method provided in embodiments of this application. Embodiments provided in this application may be applied to the network architecture shown in FIG. 1. This is not limited.

In the following embodiments, in an example, an encoder is a terminal device, and a decoder is a network device; an encoder is a terminal device, and a decoder is another terminal device; an encoder is a network device, and a decoder is another network device; or an encoder is a network device, and a decoder is a terminal device. This is not limited. It may be understood that an encoder below may be replaced with an encoding apparatus, and a decoder may be replaced with a decoding apparatus. In addition, it may be further understood that the encoder below may include a circuit other than an AI model, for example, a processing circuit, a storage circuit, and a transceiver circuit.

In the following embodiments, a plurality of AI models may be deployed in the encoder, so that the encoder may perform encoding based on the deployed AI models, for example, compress channel information. A plurality of AI models may be deployed in the decoder, so that the decoder may perform decoding based on the deployed AI models, for example, restore compressed information to obtain the channel information. In the following descriptions, for brevity, the AI model deployed in the encoder is referred to as an AI model of the encoder, and the AI model deployed in the decoder is referred to as an AI model of the decoder.

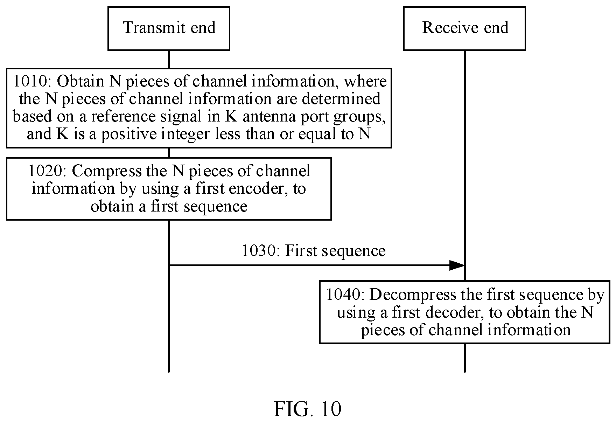

FIG. 10 is a diagram of a communication method 1000 according to an embodiment of this application. The method 1000 may include the following steps.

1010: A transmit end obtains N pieces of channel information, where

the N pieces of channel information are determined based on a reference signal in K antenna port groups, N is a positive integer, and K is a positive integer less than or equal to N. In other words, the N pieces of channel information are used to be associated with the K antenna port groups.

For example, the antenna port group may be a CSI-RS port group.

The N pieces of channel information further correspond to N analog beams.

In a possible implementation, the N analog beams are different from each other, and there is an overlapping area between coverage areas of the N analog beams.

For example, coverage areas of some of the N analog beams overlap. For example, a value of N is 5. A beam A, a beam B, a beam C, a beam D, and a beam E are included, and a coverage area of the beam A and a coverage area of the beam B overlap.

For example, coverage areas of all the N analog beams overlap. For example, a value of N is 5. A beam A, a beam B, a beam C, a beam D, and a beam E are included, and coverage areas of all the five beams overlap.

The N analog beams are in one-to-one correspondence with the N pieces of channel information. In other words, the N pieces of channel information are channel information of the N analog beams. For example, the channel information may be channel state information CSI. For details, refer to the foregoing descriptions of the CSI. Details are not described herein again.

In other words, the N analog beams are associated with the K antenna port groups. For example, the channel information of the N analog beams is determined based on the reference signal in the K antenna port groups.

When N is equal to K, the N analog beams are in one-to-one correspondence with the N antenna port groups. For example, the value of N is 3. An analog beam A corresponds to an antenna port group A, an analog beam B corresponds to an antenna port group B, and an analog beam C corresponds to an antenna port group C.

The N antenna port groups include the antenna port group A and the antenna port group B. A reference signal resource corresponding to the antenna port group A is different from a reference signal resource corresponding to the antenna port group B. It should be understood that the antenna port group is used to send the reference signal, and different reference signals correspond to different resources, for example, time domain resources and/or frequency domain resources. For example, different antenna port groups may be distinguished based on different reference signal resources groups. For example, reference signal resources include a reference signal resource group A, a reference signal resource group B, and a reference signal resource group C. The reference signal resource group A is used to send a reference signal A, and the reference signal resource group B is used to send a reference signal B. The reference signal A is sent through the antenna port group A, and the reference signal B is sent through the antenna port group B. It should be understood that the reference signal A or the reference signal B may include a plurality of reference signals.

The K antenna port groups correspond to K pieces of channel information, and N groups of channel information are determined based on the K pieces of channel information and N groups of combination coefficients. N is greater than or equal to K. K is a positive integer.

Specifically, the following uses a precoding matrix as an example of the channel information, and there may be the following two cases.

Case 1: N is equal to K. To be specific, the K antenna port groups are used to determine N=K groups of channel coefficients.

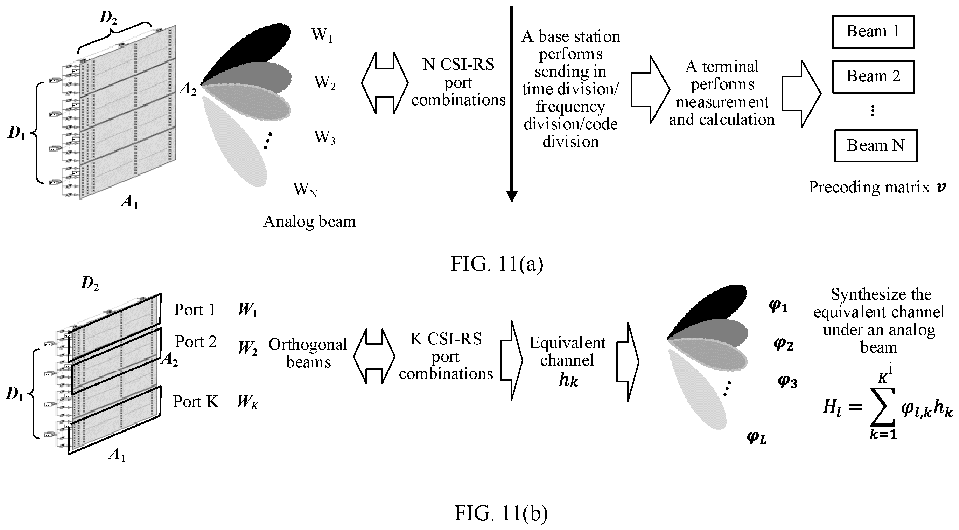

For example, a network device configures the N antenna port groups for a terminal, and each antenna port group corresponds to one analog beam. As shown in FIG. 11(a), the K antenna port groups are used to measure channel coefficients $\{H_1, H_2, H_3, ...\}$ of N different analog beams (where analog weights are respectively $\{w_1, w_2, w_3, ...\}$) in arrays $A_1, A_2, D_1, D_2$ (where $A_1$ and $A_2$ are quantities of horizontal and vertical elements, and $D_1$ and $D_2$ are quantities of digital ports) of the network device (for example, a base station). Then, the terminal performs svd decomposition, to obtain precoding matrices $\{v_1, v_2, v_3, ...\}$ in the N different analog beams through calculation. Values of the arrays $A_1, A_2, D_1, D_2$ are related to an antenna array (or are related to an analog beamforming architecture, where for the analog beamforming architecture, refer to the foregoing descriptions, and details are not described herein again).

Case 2: N is greater than K. To be specific, the K antenna port groups are used to determine N groups of channel coefficients.

For example, as shown in FIG. 11(b), the K antenna port groups are used to obtain channel coefficients (or channel responses) of the K antenna port groups. The channel coefficients are respectively denoted as $h_1$, $h_2$, ... , $h_K$. Channel coefficients $H_n = \sum_{k=1}^{K} \varphi_{n,k} h_k$ of the N analog beams may be obtained based on channel information and channel combination coefficients $\varphi_{n=[\varphi_{n}, \varphi_{n,2}, ..., \varphi_{n,K}]}$ of the K antenna port groups. Then, the terminal performs svd decomposition, to obtain precoding matrices $\{v_1, v_2, v_3, ...\}$ in the N different analog beams through calculation.

In other words, when the N pieces of channel information are N precoding matrices, the N pieces of channel information are obtained through decomposition based on the channel coefficients of the N analog beams, or the N pieces of channel information are obtained through decomposition based on the channel information and the channel combination coefficients of the K antenna port groups.

For example, the channel coefficient may be a spatial-frequency domain channel response. For example, a channel matrix represents the spatial-frequency domain channel response.

In a possible implementation, the N pieces of channel information correspond to N sequence numbers, and the N sequence numbers are in one-to-one correspondence with the N analog beams. In other words, the N analog beams are associated with the N pieces of channel information by using the N sequence numbers. For example, the value of N is 3. Three analog beams are respectively the beam A, the beam B, and the beam C, and the beam A corresponds to a sequence number 1, the beam B corresponds to a sequence number 2, and the beam C corresponds to a sequence number 3. In addition, channel information A corresponds to the sequence number 1, channel information B corresponds to the sequence number 2, and channel information C corresponds to the sequence number 3. In this case, the channel information A corresponds to the beam A, the channel information B corresponds to the beam B, and the channel information C corresponds to the beam C.

Optionally, a correspondence between the N pieces of channel information and the K antenna port groups is predefined or configured. In other words, a correspondence between the N pieces of channel information and the N analog beams is predefined or configured.

For example, the N pieces of channel information are input to a first encoder in a predefined order and/or in a stacking manner.

The predefined order may be an order configured based on sequence numbers between the foregoing channel information and beams.

The following describes the stacking manner of the channel information by using an example in which the N pieces of channel information are CSI #1 to CSI #N (beam domain), a quantity of subbands corresponding to an $n^{th}$ piece of channel information is Qn (frequency domain), a quantity of ports of the $n^{th}$ piece of channel information is Pn (spatial domain), and P and Q of the N pieces of channel information are equal. The predefined stacking manner includes the following manners.

Manner 1: The N pieces of channel information are stacked in frequency domain.

Possibility 1: The N pieces of channel information are stacked first in frequency domain and then in beam domain. For example, a reference signal corresponding to each of the N pieces of channel information occupies Q subbands. The Q subbands are different from each other. The N pieces of channel information are arranged in an order in frequency domain. For example, the N pieces of channel information are arranged in ascending order of indexes in frequency domain.

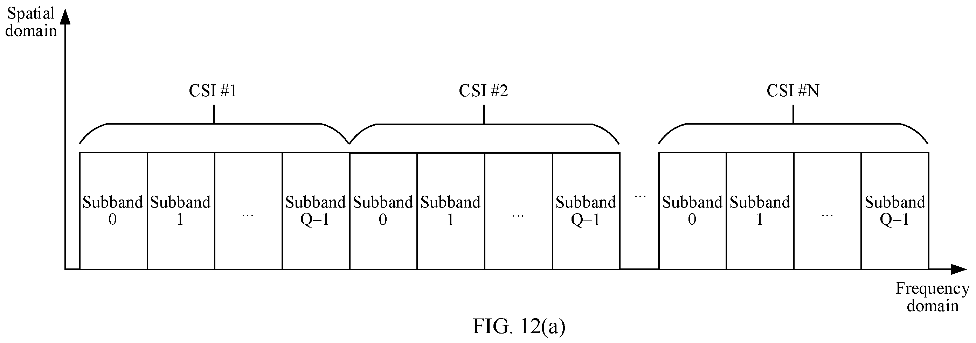

For example, as shown in FIG. 12(a), CSI #1 to CSI #N are arranged in ascending order of indexes in frequency domain. A reference signal corresponding to each piece of CSI occupies Q subbands.

Possibility 2: The N pieces of channel information are stacked first in beam domain and then in frequency domain. For example, one subband includes frequency domain resources of reference signals corresponding to a plurality of pieces of channel information. Further, each of Q subbands includes frequency domain resources of reference signals corresponding to a plurality of pieces of channel information. For example, the frequency domain resources in each subband are used by the K antenna port groups for sending the reference signal. The Q subbands are arranged in an order in frequency domain. For example, the Q subbands are arranged in ascending order of subband indexes in frequency domain.

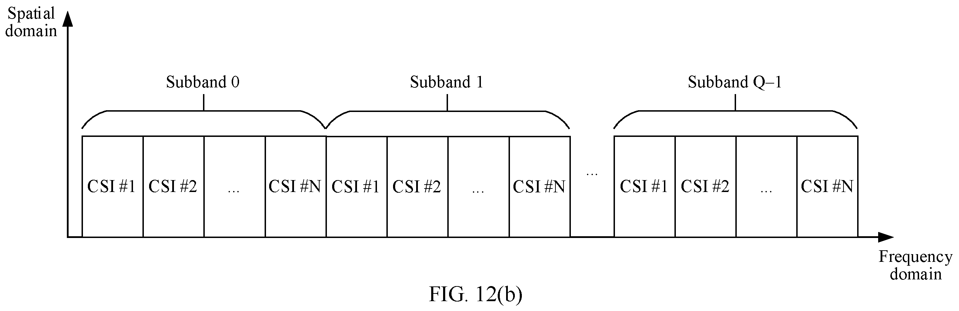

For example, as shown in FIG. 12(b), CSI #1 to CSI #N are arranged in ascending order of indexes in any subband. A reference signal corresponding to each piece of CSI occupies Q subbands. A subband 0 to a subband Q-1 are arranged in ascending order of indexes in frequency domain.

Manner 2: The N pieces of channel information are stacked in spatial domain.

Possibility 1: The N pieces of channel information are stacked first in spatial domain and then in beam domain. For example, in a same subband, an arrangement is first performed based on indexes of the channel information, for example, in an ascending order of the channel information. In one traversal of the channel information (that is, one arrangement of the N pieces of channel information), each piece of channel information corresponds to a same antenna port. A reference signal corresponding to the N pieces of channel information occupies Q subbands, and the channel information is stacked in a same manner in all the Q subbands.

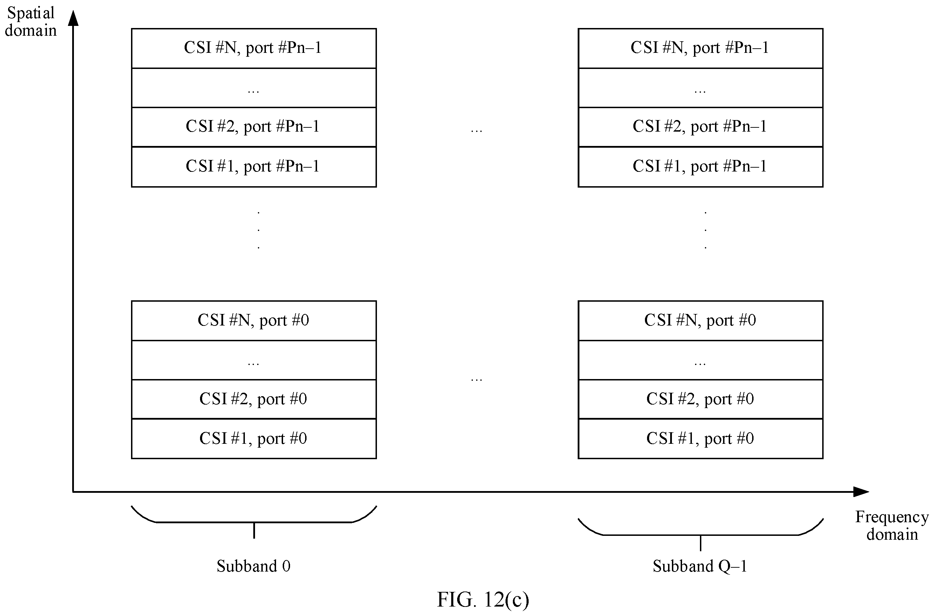

For example, as shown in FIG. 12(c), in a subband, CSI #1 to CSI #N are arranged in ascending order of indexes in spatial domain. For example, in an antenna port #0, the CSI #1 to the CSI #N are arranged in ascending order of indexes. Antenna ports are also arranged in ascending order of indexes in spatial domain. For example, in a spatial-domain direction, a port in a $1^{st}$ group of correspondences is a port #0, and a port in a last group of correspondences is a port #Pn-1. In other words, each antenna port traverses the CSI #1 to the CSI #N. Antenna ports and CSI in each subband are arranged in a same order in frequency domain.

Possibility 2: The N pieces of channel information are stacked first in beam domain and then in spatial domain. For example, in a same subband, an arrangement is first performed based on indexes of antenna ports, for example, in an ascending order of the indexes of the antenna ports. In one traversal of the antenna ports (that is, one arrangement of all the antenna ports), the antenna ports correspond to same channel information. A reference signal corresponding to the N pieces of channel information occupies Q subbands, and the channel information is stacked in a same manner in all the Q subbands.

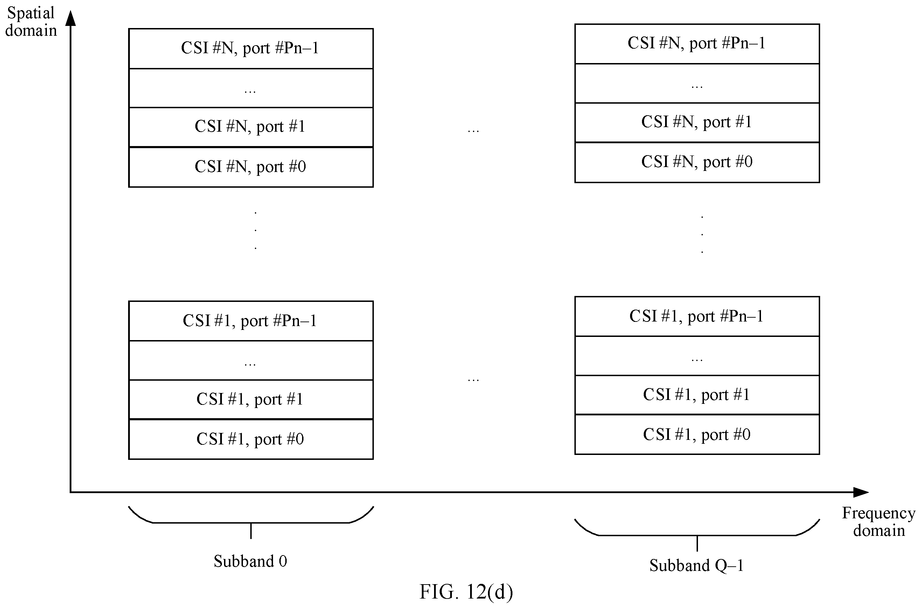

For example, as shown in FIG. 12(d), in a subband, CSI #1 to CSI #N are arranged in ascending order of indexes in spatial domain. For example, each piece of CSI corresponds to an antenna port #0 to an antenna port #Pn-1, and the antenna ports are arranged in ascending order of indexes in spatial domain. That is, each piece of CSI traverses the antenna port #0 to the antenna port #Pn-1. Antenna ports and CSI in each subband are arranged in a same order in frequency domain.

Manner 3: The N pieces of channel information are stacked in a third dimension.

For example, the N pieces of channel information are stacked in a specific order in beam domain. For example, in a same subband, an arrangement is performed based on indexes of antenna ports, for example, in an ascending order of the indexes of the antenna ports. In one traversal of the antenna ports (that is, one arrangement of all the antenna ports), the antenna ports correspond to same channel information. A reference signal corresponding to the N pieces of channel information occupies Q subbands, and the channel information is stacked in a same manner in all the Q subbands.

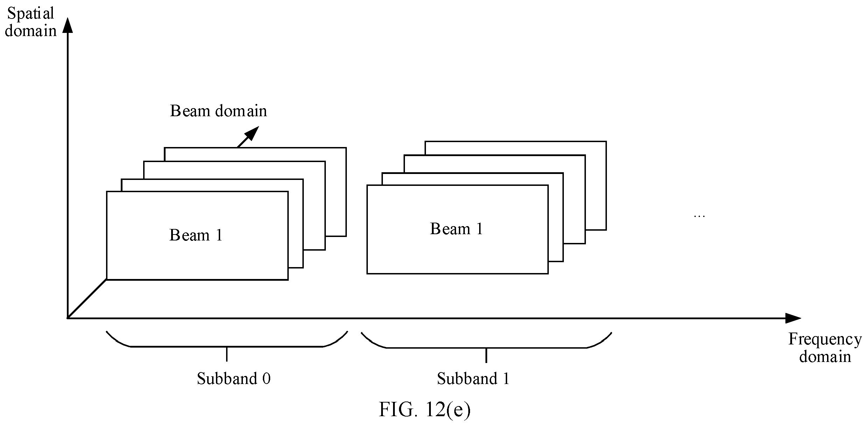

For example, as shown in FIG. 12(e), in a subband, CSI #1 to CSI #N are arranged in ascending order of indexes in beam domain. Each piece of CSI corresponds to an antenna port #0 to an antenna port #Pn-1, and the antenna ports are arranged in ascending order of indexes in beam domain. That is, each piece of CSI traverses the antenna port #0 to the antenna port #Pn-1. Antenna ports and CSI in each subband are arranged in a same order in frequency domain.

Optionally, frequency domain resources of the K antenna port groups or frequency domain resources of the reference signal in the K antenna port groups have a same part. The frequency domain resource may be a subband, or may be a resource block. For example, there is a same subband in subbands occupied by the reference signal in the K antenna port groups, or there is a same resource block in resource blocks occupied by the reference signal in the K antenna port groups.

For example, a value of K is 3. Three antenna port groups are respectively the antenna port group A, the antenna port group B, and the antenna port group C. A reference signal in the antenna port group A occupies a subband 1, a subband 2, and a subband 3, a reference signal in the antenna port group B occupies the subband 1, a subband 5, and a subband 6, and a reference signal in the antenna port group C occupies the subband 1, a subband 4, and the subband 5. Reference signals in the three antenna port groups all occupy the same subband 1.

Optionally, the K antenna port groups include a first antenna port group and a second antenna port group, and a slot interval corresponding to the first antenna port group and the second antenna port group is less than or equal to a first threshold. For example, a plurality of antenna port groups are located in a same slot or adjacent slots, and a slot interval between the plurality of antenna port groups does not exceed t. t is an example of the first threshold, and the first threshold may be predefined or configured.

The slot interval corresponding to the antenna port groups may be understood as an interval between locations, on a time domain resource, of reference signals corresponding to different antenna port groups.

1020: The transmit end compresses the N pieces of channel information by using the first encoder, to obtain a first sequence.

The first sequence is a joint feedback quantity of the N pieces of channel information in 1010. In other words, the first sequence can indicate the N pieces of channel information. In other words, the first sequence includes the N pieces of channel information.

The first sequence may be a sequence before quantization. For example, the first sequence may be a one-dimensional real sequence or a complex sequence, and represents the N pieces of channel information.

The first sequence may be a sequence after quantization. For example, the first sequence includes X bits. In other words, the X bits indicate the N pieces of channel information.

Before the N pieces of channel information are compressed by using the first encoder, second information may be further received, where the second information indicates the first encoder. For example, the second information indicates an identifier of the first encoder. Further, different encoders have different identifiers, and the first encoder belongs to at least one encoder.

Optionally, the first encoder corresponds to a first parameter set, and the first parameter set includes at least one of the following:
the value of N, joint feedback overheads X, the K antenna port groups corresponding to the N pieces of channel information, or N combination coefficient sets corresponding to the N pieces of channel information.

When the first sequence is the sequence before quantization, the joint feedback overheads are a length of the first sequence, where the length of the first sequence may be understood as a quantity of elements included in the first sequence.

Alternatively, when the first sequence is the sequence after quantization, the joint feedback overheads are a quantity of bits of the first sequence.

The K antenna port groups corresponding to the N pieces of channel information may be indicated by indexes of the K antenna port groups.

In other words, the first encoder is configured to compress channel information corresponding to the first parameter set.

Optionally, different encoders correspond to different parameter sets.

For example, a second encoder corresponds to a second parameter set, and a parameter included in the parameter set corresponding to the second encoder is different from a parameter included in the parameter set corresponding to the first encoder. For example, a parameter related to the channel information is in the first parameter set, and a parameter related to other information is in the second parameter set. That is, the first encoder is configured to compress the channel information, and the second encoder is configured to compress the other information.

For example, a value of the parameter included in the parameter set corresponding to the second encoder is different from a value of the parameter included in the parameter set corresponding to the first encoder. For example, a value of a combination coefficient set included in the first parameter set is different from a value of a combination coefficient set included in the second parameter set.

In a possible implementation, the first encoder may be configured to compress channel information corresponding to a plurality of groups of analog beams. In other words, the first encoder may correspond to different groups of analog beams, or the first encoder corresponds to different groups of channel information.

1030: The transmit end sends the first sequence to a receive end, and correspondingly, the receive end receives the first sequence.

1040: The receive end decompresses the first sequence by using a first decoder, to obtain the N pieces of channel information.

In other words, the receive end reconstructs the first sequence by using the first decoder, to obtain the N pieces of channel information.

The first decoder corresponds to the first parameter set. For the first parameter set, refer to the descriptions of 1020. Details are not described again.

Optionally, different decoders correspond to different parameter sets.

For example, a second decoder corresponds to the second parameter set, and a parameter included in the parameter set corresponding to the second decoder is different from a parameter included in the parameter set corresponding to the first decoder. For example, a parameter related to the channel information is in the first parameter set, and a parameter related to other information is in the second parameter set. That is, the first decoder is configured to compress the channel information, and the second decoder is configured to compress the other information.

For example, a value of the parameter included in the parameter set corresponding to the second decoder is different from a value of the parameter included in the parameter set corresponding to the first decoder. For example, a value of a combination coefficient set included in the first parameter set is different from a value of a combination coefficient set included in the second parameter set.

In a possible implementation, the first decoder may be configured to compress channel information corresponding to a plurality of groups of analog beams. In other words, the first decoder may correspond to different groups of analog beams, or the first decoder corresponds to different groups of channel information.

It should be understood that the transmit end may be understood as a sender of the first sequence, and the receive end may be understood as a receiver of the first sequence. The transmit end may be an apparatus in which an encoder is disposed, and the receive end may be an apparatus in which a decoder is disposed. For example, the transmit end may be a terminal device, and the receive end may be a network device.

It should be further understood that the first sequence is merely used as an example of compressed channel information.

In the method, channel information of analog beams is jointly compressed by using the encoder and fed back, and then the channel information of the analog beams is obtained through decompression by using the decoder, thereby reducing overheads of feeding back the channel information.

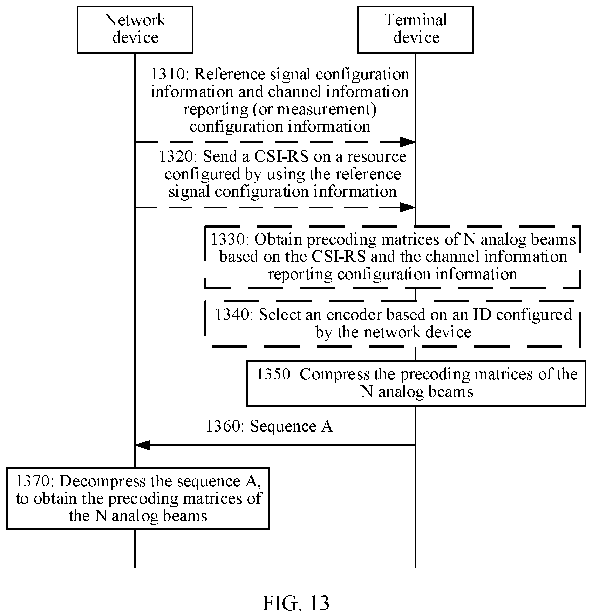

For ease of clearly understanding the method in this application, the following shows a diagram of a communication procedure in FIG. 13. In the communication procedure, an example in which a network device and a terminal device serve as two communication parties is used. An encoder is disposed in the terminal device, and a decoder is disposed in the network device. A CSI-RS is used as an example of a reference signal, and a precoding matrix is used as an example of channel information.

Specifically, the following steps are included.

1310: The network device sends reference signal configuration information and channel information reporting (or measurement) configuration information to the terminal device.

The reference signal configuration information includes information related to a reference signal port group. For example, a quantity of groups is K, and a quantity of ports in each group is $P_{CSI-RS,k}$, $k = 0, 1, ... , K - 1$. In a case, quantities of ports in all port groups are the same, for example, are $P_{CSI-RS}$.

The reference signal configuration information further includes information related to a reference signal resource group. For example, a quantity of reference signal resource groups is K, and a quantity of reference signal resources and/or a quantity of ports in each group are/is $P_{CSI-RS,k}$ $kK$ for example, are $P_{CSI-RS}$. Unless otherwise specified, the following uses the reference signal port group (or a port group) as an example for description. The same method may be applied to a scenario of the reference signal resource group.

The channel information reporting configuration information includes content and a quantity that are reported. For example, the configuration information includes a quantity N of measured channel information groups, feedback overheads X, and an identifier (identifier, ID) of the encoder and/or an identifier of the decoder for joint compression and reconstruction.

The reference signal configuration information and/or the channel information reporting configuration information may further include a manner of sending the CSI-RS and/or a relationship between a CSI-RS port group and multi-analog beam channel information.

The CSI-RS may be sent in a time division manner, a frequency division manner, or a code division manner. Specifically, detailed descriptions are provided below (in step 1320).

The relationship between the CSI-RS port group and the multi-analog beam channel information may be a relationship between a quantity of CSI-RS port groups and a quantity of pieces of analog beam channel information. For example, the quantity of CSI-RS port groups is less than the quantity of pieces of analog beam channel information, or the quantity of CSI-RS port groups is equal to the quantity of pieces of analog beam channel information. Further, as described above, assuming that the quantity of CSI-RS port groups is less than the quantity of pieces of analog beam channel information, N pieces of analog beam channel information are determined based on channel information and channel combination coefficients of K CSI-RS port groups. The relationship between the CSI-RS port group and the multi-analog beam channel information may alternatively be a correspondence between the N pieces of analog beam channel information and the associated K CSI-RS port groups. For example, the correspondence is indicated by K port group combination coefficients. Optionally, the combination coefficient is represented in a form of a matrix, a number sequence, or a character string.

Step 1310 is optional.

1320: The network device sends the CSI-RS on a resource configured by using the reference signal configuration information, and correspondingly, the terminal device receives the CSI-RS.

In an implementation, different CSI-RS port groups (that is, an example of antenna port groups) send CSI-RSs in the time division method, that is, send the CSI-RSs on different time domain resources (that is, slots or OFDM symbols). In the time division manner, a plurality of reference signals can be sent based on different analog beams in an HBF architecture, thereby measuring the channel information.

In an implementation, different CSI-RS port groups send CSI-RSs on different frequency domain resources (that is, component carriers, resource blocks, or different subcarriers). For example, a first CSI-RS is sent in a first CSI-RS port group, and a second CSI-RS is sent in a second CSI-RS port group. The reference signal is sent in the frequency division manner, so that a base station can quickly scan the channel information, to improve efficiency.

In an implementation, different CSI-RS port groups are sent in an OCC code division manner. For example, a first antenna group performs sending based on a first analog beam; and a second antenna group performs sending based on a second analog beam that is orthogonal to the first analog beam. Such a manner may also be applied to the HBF architecture, and is used by the base station to quickly scan the channel information.

In a possible implementation, the base station separately configures CSI-RS port groups 1 to K, and the plurality of port groups occupy same bandwidth in a same frequency domain (but may be located in different resource units of a same resource block). In addition, the plurality of port groups are located in a same slot or adjacent slots, and a slot offset of time domain resources of the plurality of CSI-RS port groups does not exceed t, to ensure timeliness of jointly feeding back a plurality of groups of channel information and joint compression performance.

A value or a value range of t may be predefined or configured.

Step 1320 is optional.

1330: The terminal device obtains precoding matrices of the N analog beams based on the CSI-RS and the channel information reporting configuration information.

Specifically, refer to manners of obtaining the channel information in Case 1 and Case 2 in 1010.

Step 1330 is optional.

1340: The terminal device selects an encoder (ENC) based on the ID configured by the network device.

The encoder herein may include one or more AI models. It should be noted that an AI model configured by the network device for joint feedback corresponds to a quantity N of analog beams for joint feedback, the feedback overheads X, the K CSI-RS port groups, and the combination coefficients $\varphi_n$ (if the channel information is obtained in Case 2, $\varphi_n$ exists).

It should be understood that step 1340 is optional. For example, when the network device does not configure the encoder used by the terminal device, the terminal device may autonomously select the encoder. The terminal device may indicate, to the network device, a decoder used by the network device. To be specific, regardless of a specific manner in which the encoder and the decoder are configured, the encoder and the decoder used by the terminal device and the network device correspond to the foregoing parameters, to avoid inconsistent encoding and decoding.

Specifically, for a manner in which the terminal device indicates the encoder or the decoder to the network device, refer to step 1360.

1350: The terminal device compresses the precoding matrices of the N analog beams.

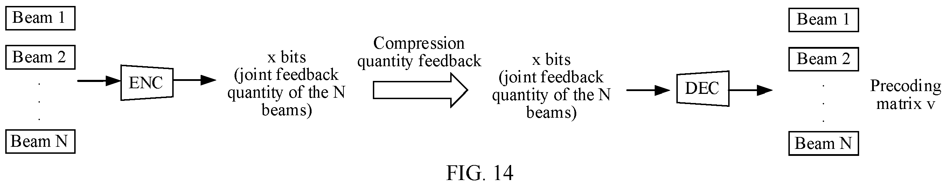

As shown in FIG. 14, the terminal device combines and jointly inputs the precoding matrices $\{v_1, v_2, v_3, ...\}$ of the N analog beams to the encoder for joint compression. An X-bit sequence A output by the encoder is a joint feedback quantity corresponding to the precoding matrices of the N analog beams. It should be noted that an input arrangement stacking manner of the precoding matrices of the N analog beams may be defined during training, and is consistent during usage and training, to ensure that input logical sequence numbers Beam 1 to Beam N are in one-to-one correspondence with the N analog beams.

Optionally, after jointly compressing the precoding matrices of the N analog beams, the terminal device may further perform quantization.

1360: The terminal device sends the sequence A to the network device, and correspondingly, the network device receives the sequence A.

As shown in FIG. 14, the network device receives the joint feedback quantity, that is, the sequence A.

Optionally, the terminal device further sends indication information to the network device, where the indication information indicates the encoder used by the terminal device. For example, the indication information indicates the ID of the encoder used by the terminal device.

Alternatively, the indication information indicates the decoder used by the network device. For example, the indication information indicates an ID of the decoder used by the network device.

1370: The network device decompresses the sequence A, to obtain the precoding matrices of the N analog beams.

For example, the network device selects a corresponding decoder (DEC) (defined as an AI model) based on the quantity N of analog beams for joint feedback, the feedback overheads X, the K CSI-RS port groups, and the combination coefficients $\varphi_n$ (if the channel information is obtained in Case 2, $\varphi_n$ exists) that are configured for the terminal device, and inputs the sequence to the decoder for reconstruction (also referred to as decompression), and an output is the precoding matrices $\{v_1, v_2, v_3, ...\}$ of the N analog beams.

It should be noted that an output arrangement stacking manner of the precoding matrices of the N analog beams may be defined during training, and is consistent during usage and training, to ensure that the input logical sequence numbers Beam 1 to Beam N are in one-to-one correspondence with the N analog beams in a physical sense.

Embodiments of this application further provide a training method. The following uses offline joint training of a two-side network as an example (it should be understood that the offline joint training is not a unique training manner of the two-side network, and offline training of a network may alternatively be performed in another training manner, for example, two-side independent training).

The training method 1500 includes the following steps.

1510: Obtain a first training dataset, where the first training dataset includes N pieces of data, the N pieces of data are determined based on a reference signal in K antenna port groups, N is a positive integer, and K is a positive integer less than or equal to N.

Specifically, for a manner of determining the N pieces of data, refer to the descriptions of Case 1 or Case 2 in 910.

For example, training data of precoding matrices of a plurality of beams is collected, and each dataset needs to correspond to a parameter configuration, for example, a quantity N of analog beams, corresponding K CSI-RS port groups, and combination coefficients $\varphi_n$ (if existing). In each data sample, logical sequence numbers Beam 1 to Beam N are defined for the precoding matrices in beam domain, and the logical sequence numbers need to be in one-to-one correspondence with actual N analog beams corresponding to the K CSI-RS port groups in a physical sense, to ensure that a network device and the terminal device have a consistent understanding of the analog beam.

1520: Train a first model, where the first model includes a first submodel and a second submodel, an input of the first submodel includes the first training dataset, an output of the first submodel is an input of the second submodel, the second submodel outputs a second training dataset, the second training dataset indicates the N pieces of data, the output of the first submodel is a first sequence, and the first sequence is a joint feedback quantity of the N pieces of data.

It should be understood that the first submodel and the second submodel may alternatively be independently trained.

The second training dataset may be the same as the first training dataset. To be specific, the second training dataset is completely the same as the first training dataset.

The second training dataset may alternatively be different from the first training dataset. To be specific, there is a specific deviation/error between the second training dataset and the first training dataset, and the deviation/error is in an allowed range. In other words, the deviation/error is in an acceptable range. The allowed range of the deviation/error may be predefined or configured. Alternatively, the second training dataset is a processed first training dataset. For example, the second training dataset includes the first training dataset.

Optionally, the first submodel may be an encoder, and the second submodel may be a decoder.

Optionally, a combination of a trained and used encoder, a trained and used decoder, and an analog beam that supports joint feedback are aligned by defining an AI model ID. One model ID combination (encoder ID-decoder ID) may correspond to one group or more groups of feedback configuration parameters, including a quantity N of beams for joint feedback, joint feedback overheads X, the K CSI-RS port groups corresponding to the N analog beams for joint feedback, and the combination coefficients $\varphi_n$ (if existing). The terminal device or the network device defines a model ID, uniformly defines the one group or more groups of feedback configuration parameters corresponding to the model ID combination, and selects a dataset corresponding to a configuration for joint training. Performance of a two-side AI model in joint feedback can be ensured by associating a model ID group, the feedback configuration parameter, and a training dataset.

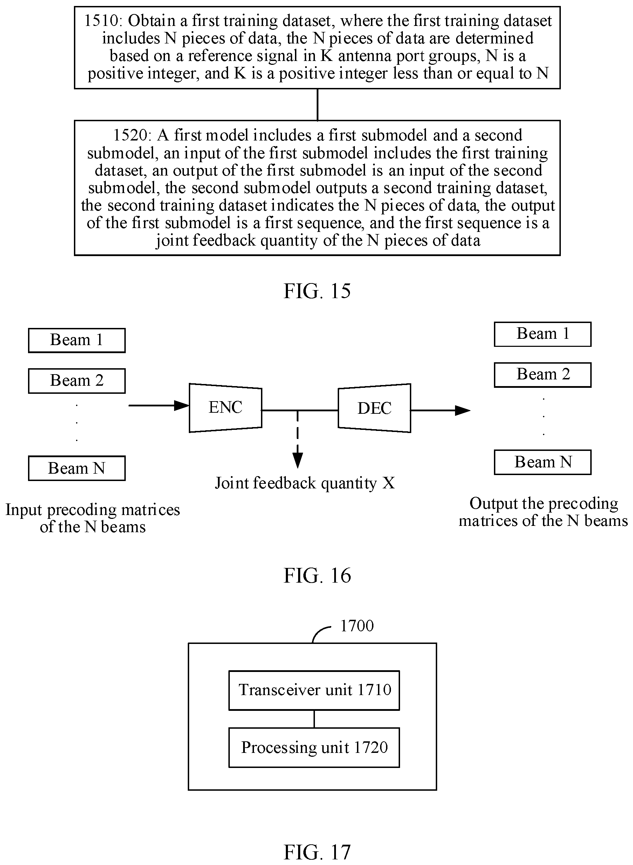

As shown in FIG. 16, after a model and a training dataset of the model are determined, joint training is performed on the encoder/decoder on the network device, the terminal device, or a third party.

Optionally, after the joint training is completed, the trained encoder (ENC) is delivered to the terminal device, and the trained decoder (DEC) is delivered to a base station, to perform joint feedback of the precoding matrices of the plurality of beams.

It should be noted that during the joint training, the terminal/base station needs to uniformly define a correspondence between the logical sequence numbers Beam 1 to Beam N of the analog beams of the input/output precoding matrices and the actual N analog beams corresponding to the K CSI-RS port groups in a physical sense, and define a stacking manner of the input/output precoding matrices of the N analog beams on an input/output side, to ensure unified understandings of the N analog beams of the AI model on the input and output side on two sides, and ensure joint compression performance of the solution. For the stacking manner of the precoding matrices of the N analog beams on the input/output side, refer to the descriptions of Manner 1 to Manner 3 in 1010. Details are not described again.

In this method, the encoder-decoder have capabilities of compressing-reconstructing channel information of the N analog beams through joint training.

It may be understood that some of the foregoing embodiments are mainly described by using the terminal device and the network device as examples. This is not limited. For example, the terminal device may also be replaced with a component (for example, a chip or a circuit) of the terminal device, and the network device may also be replaced with a component (for example, a chip or a circuit) of the network device.

It may be further understood that the solutions in embodiments of this application may be appropriately combined for use, and explanations or descriptions of the terms in embodiments may be mutually referenced or explained in embodiments. This is not limited.

FIG. 17 is a block diagram of a communication apparatus 1700 according to an embodiment of this application. The apparatus 1700 includes a transceiver unit 1710 and a processing unit 1720. The transceiver unit 1710 may be configured to implement a corresponding communication function. The transceiver unit 1710 may also be referred to as a communication interface or a communication unit. The processing unit 1720 may be configured to process data.

Optionally, the apparatus 1700 may further include a storage unit. The storage unit may be configured to store instructions and/or data. The processing unit 1720 may read the instructions and/or the data in the storage unit, so that the apparatus implements the foregoing method embodiments.

In a design, the apparatus 1700 is configured to perform steps or procedures performed by the encoder in the foregoing method embodiments, a device in which the encoder is disposed, or a chip used in the encoder, for example, steps or procedures performed by the transmit end in the embodiment shown in FIG. 10, and steps or procedures performed by the encoder in the embodiment shown in FIG. 15. The transceiver unit 1710 is configured to perform receiving and sending-related operations on an encoder side (or the transmit end) in the foregoing method embodiments. The processing unit 1720 is configured to perform processing-related operations on the encoder side (or the transmit end) in the foregoing method embodiments.

In a possible implementation, the processing unit 1720 is configured to obtain N pieces of channel information, where the N pieces of channel information are determined based on a reference signal in K antenna port groups, N is a positive integer, and K is a positive integer less than or equal to N. The processing unit 1720 is further configured to compress the N pieces of channel information by using a first encoder, to obtain a first sequence, where the first sequence is a joint feedback quantity of the N pieces of channel information. The transceiver unit 1710 is configured to send N pieces of compressed information to a decoder.

In an example, the first encoder corresponds to a first parameter set, and the first parameter set includes at least one of the following:
a value of N, joint feedback overheads X, the K antenna port groups corresponding to the N pieces of channel information, and N combination coefficient sets corresponding to the N pieces of channel information. When the first sequence is a sequence before quantization, the joint feedback overheads are a length of the first sequence; or when the first sequence is a sequence after quantization, the joint feedback overheads are a quantity of bits of the first sequence, where X is a positive integer, and K is a positive integer.

In another example, the first encoder corresponds to at least one first parameter set.

In another example, a device in which the encoder is disposed is a terminal device, and a device in which the decoder is disposed is a network device.

In another design, the apparatus 1700 is configured to perform steps or procedures performed by the decoder in the foregoing method embodiments, a device in which the decoder is disposed, or a chip used in the decoder, for example, steps or procedures performed by the receive end in the embodiment shown in FIG. 10, and steps or procedures performed by the decoder in the embodiment shown in FIG. 15. The transceiver unit 1710 is configured to perform receiving and sending-related operations on a decoder side (or the receive end) in the foregoing method embodiments. The processing unit 1720 is configured to perform processing-related operations on the decoder side (or the receive end) in the foregoing method embodiments.

In a possible implementation, the transceiver unit 1710 is configured to receive a first sequence, where the first sequence is a joint feedback quantity of N pieces of channel information, the N pieces of channel information are determined based on a reference signal in K antenna port groups, N is a positive integer, and K is a positive integer less than or equal to N. The processing unit 1720 is configured to decompress the first sequence by using a first decoder, to obtain the N pieces of channel information.

In an example, the first decoder corresponds to a first parameter, and the first parameter includes at least one of the following:

a value of N, joint feedback overheads X, the K antenna port groups corresponding to the N pieces of channel information, and N combination coefficient sets corresponding to the N pieces of channel information. When the first sequence is a sequence before quantization, the joint feedback overheads are a length of the first sequence; or when the first sequence is a sequence after quantization, the joint feedback overheads are a quantity of bits of the first sequence, where X is a positive integer, and K is a positive integer.

In another example, the first decoder corresponds to at least one first parameter set.

In another example, a device in which the encoder is disposed is a terminal device, and a device in which the decoder is disposed is a network device.

It should be understood that a specific process in which the units perform the foregoing corresponding steps is described in detail in the foregoing method embodiments, and for brevity, details are not described herein.

It should be further understood that the apparatus 1700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1700 may be specifically a first terminal device in the foregoing embodiments, and may be configured to perform procedures and/or steps corresponding to the first terminal device in the foregoing method embodiments. Alternatively, the apparatus 1700 may be specifically a second terminal device in the foregoing embodiments, and may be configured to perform procedures and/or steps corresponding to the second terminal device in the foregoing method embodiments. To avoid repetition, details are not described herein again.

The apparatus 1700 in the foregoing solutions has a function of implementing corresponding steps performed by the first terminal device in the foregoing methods, or the apparatus 1700 in the foregoing solutions has a function of implementing corresponding steps performed by the second terminal device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 1710 may alternatively be a transceiver circuit (for example, may include a receiver circuit and a transmitter circuit), and the processing unit may be a processing circuit.

It should be noted that the apparatus in FIG. 17 may be a network element or a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

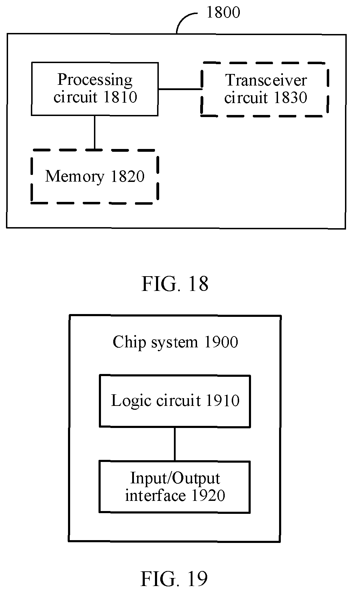

FIG. 18 is a diagram of another communication apparatus 1800 according to an embodiment of this application. The apparatus 1800 includes a processing circuit 1810. The processing circuit 1810 is coupled to a memory 1820. The memory 1820 is configured to store a computer program or instructions and/or data. The processing circuit 1810 is configured to execute the computer program or the instructions stored in the memory 1820 or read the data stored in the memory 1820 to perform the methods in the foregoing method embodiments.

Optionally, the processing circuit 1810 is one or more processors or a circuit configured to process or control in the one or more processors.

Optionally, there is one or more memories 1820.

Optionally, the memory 1820 and the processing circuit 1810 are integrated together or separately disposed.

Optionally, as shown in FIG. 18, the apparatus 1800 further includes a transceiver circuit 1830. The transceiver circuit 1830 is configured to receive and/or send a signal. For example, the processing circuit 1810 is configured to control the transceiver circuit 1830 to receive and/or send the signal.

In an example, the processing circuit 1810 may have a function of the processing unit 1720 shown in FIG. 17, the memory 1820 may have a function of the storage unit, and the transceiver circuit 1830 may have a function of the transceiver unit 1710 shown in FIG. 17.

In a solution, the apparatus 1800 is configured to implement operations performed by the encoder in the foregoing method embodiments.

For example, the processing circuit 1810 is configured to execute the computer program or the instructions stored in the memory 1820, to implement related operations of the encoder in the foregoing method embodiments, for example, the method performed by the encoder in the embodiment shown in FIG. 10, or the method performed by the terminal device in the embodiment shown in FIG. 13 or FIG. 15.

In another solution, the apparatus 1800 is configured to implement operations performed by the decoder in the foregoing method embodiments.

For example, the processing circuit 1810 is configured to execute the computer program or the instructions stored in the memory 1820, to implement related operations of the decoder in the foregoing method embodiments, for example, the method performed by the decoder in the embodiment shown in FIG. 10, or the method performed by the network device in the embodiment shown in FIG. 13 or FIG. 15.

It should be understood that the apparatus 1800 may be the foregoing encoder, decoder, chip used in the encoder or the decoder, or a device including the encoder or the decoder.

When the apparatus 1800 is a network device or user equipment, the transceiver circuit 1830 may be a transceiver.

When the apparatus 1800 is the chip used in the encoder or the decoder, the transceiver circuit 1830 may be an input/output interface.

When the apparatus 1800 is a device that is physically disposed independently of a network device or user equipment, for example, an OTT device or a cloud server, the apparatus 1800 communicates with the network device or the user equipment. For example, sending or receiving a first sequence may be performed through an air interface between the network device and the user equipment.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

FIG. 19 is a diagram of a chip system 1900 according to an embodiment of this application. The chip system 1900 (or may be referred to as a processing system) includes a processing circuit 1910 (or may be referred to as a logic circuit) and an input/output interface (input/output interface) 1920.

The logic circuit 1910 may be a processing circuit in the chip system 1900. The logic circuit 1910 may be coupled and connected to a storage unit, and invoke instructions in the storage unit, so that the chip system 1900 can implement the methods and functions in embodiments of this application. The input/output interface 1920 may be an input/output circuit in the chip system 1900, and outputs information processed by the chip system 1900, or inputs to-be-processed data or signaling information to the chip system 1900 for processing.

Specifically, for example, if the chip system 1900 is installed in an encoder, and the logic circuit 1910 is coupled to the input/output interface 1920, the logic circuit 1910 may send compressed information to a decoder through the input/output interface 1920, where the compressed information may be obtained by the logic circuit 1910 by compressing channel information. Alternatively, the input/output interface 1920 may input a message from a second terminal device to the logic circuit 1910 for processing. For another example, if the chip system 1900 is installed in a decoder, and the logic circuit 1910 is coupled to the input/output interface 1920, the input/output interface 1920 may input compressed information from an encoder to the logic circuit 1910 for processing.

In a solution, the chip system 1900 is configured to implement operations performed by the encoder in the foregoing method embodiments.

For example, the logic circuit 1910 is configured to implement processing-related operation performed by the encoder in the foregoing method embodiments, for example, processing-related operations performed by the encoder (or the transmit end) in the embodiment shown in FIG. 10, or processing-related operations performed by the encoder in the embodiment shown in FIG. 15. The input/output interface 1920 is configured to implement sending and/or receiving-related operations performed by the encoder in the foregoing method embodiment, for example, sending and/or receiving-related operations performed by the encoder (or the transmit end) in the embodiment shown in FIG. 10, or sending and/or receiving-related operations performed by the encoder in the embodiment shown in FIG. 15.

In another solution, the chip system 1900 is configured to implement operations performed by the decoder in the foregoing method embodiments.

For example, the logic circuit 1910 is configured to implement processing-related operation performed by the decoder in the foregoing method embodiments, for example, processing-related operations performed by the decoder (or the receive end) in the embodiment shown in FIG. 10, or processing-related operations performed by the decoder in the embodiment shown in FIG. 15. The input/output interface 1920 is configured to implement sending and/or receiving-related operations performed by the decoder (or the receive end) in the foregoing method embodiment, for example, sending and/or receiving-related operations performed by the decoder (or the receive end) in the embodiment shown in FIG. 10, or sending and/or receiving-related operations performed by the decoder in the embodiment shown in FIG. 15.

An embodiment of this application further provides a computer-readable storage medium. The computer-readable storage medium stores computer instructions that are used to implement the methods performed by the encoder or the decoder in the foregoing method embodiments.

For example, when a computer program is executed by a computer, the computer is enabled to implement the methods performed by the encoder or the decoder in the foregoing method embodiments.

An embodiment of this application further provides a computer program product, including instructions. When the instructions are executed by a computer, the method performed by the encoder or the decoder in the foregoing method embodiments is implemented.

An embodiment of this application further provides a communication system. The communication system includes the encoder and the decoder in the foregoing embodiments. For example, the system includes the transmit end and the receive end shown in FIG. 10, or the encoder and the decoder in the embodiment shown in FIG. 15. For another example, the system includes a terminal device in which an encoder is disposed and a network device in which a decoder is disposed.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   obtaining N pieces of channel information, wherein the N pieces of channel information are determined based on a reference signal in K antenna port groups, N is a positive integer, and K is a positive integer less than or equal to N; compressing the N pieces of channel information by using a first encoder, to obtain a first sequence, wherein the first sequence is a joint feedback quantity of the N pieces of channel information; and sending the first sequence.

2. The method according to claim 1, wherein the first encoder corresponds to a first parameter set, and the first parameter set comprises at least one of the following:

   a value of N, joint feedback overheads X, the K antenna port groups corresponding to the N pieces of channel information, or N combination coefficient sets corresponding to the N pieces of channel information, wherein
   when the first sequence is a sequence before quantization, the joint feedback overheads are a length of the first sequence; or
   when the first sequence is a sequence after quantization, the joint feedback overheads are a quantity of bits of the first sequence, wherein X is a positive integer, and K is a positive integer.

3. The method according to claim 2, wherein the first encoder corresponds to at least one first parameter set.

4. The method according to any one of claims 1 to 3, wherein the method further comprises:
   receiving second information, wherein the second information indicates the first encoder.

5. The method according to any one of claims 1 to 4, wherein a correspondence between the N pieces of channel information and the K antenna port groups is predefined or configured.

6. The method according to claim 5, wherein the N pieces of channel information are input to the first encoder in a predefined order and/or in a stacking manner.

7. The method according to any one of claims 1 to 6, wherein the N pieces of channel information are arranged in a first order along a frequency domain direction in a frequency domain resource unit;

   the N pieces of channel information are arranged in a second order along a port or port group domain direction in a frequency domain resource unit; or
   the N pieces of channel information are arranged in a third order along a beam domain in a frequency domain resource unit.

8. The method according to claim 7, wherein the first order, the second order, and the third order are predefined or configured.

9. The method according to any one of claims 1 to 8, wherein frequency domain resources of the K antenna port groups comprise one or more same subbands.

10. The method according to any one of claims 1 to 9, wherein the K antenna port groups comprise a first antenna port group and a second antenna port group, and a slot offset of time domain resources corresponding to the first antenna port group and the second antenna port group is less than or equal to a

**EP 4 779 893 A1**

first threshold.

**11.** The method according to claim 10, wherein the first threshold is predefined or configured.

**12.** The method according to any one of claims 1 to 11, wherein the N pieces of channel information are obtained through calculation based on K pieces of channel information obtained through measurement by using the K antenna port groups, and the N combination coefficient sets, and each of the N pieces of channel information is obtained based on the K pieces of channel information and a combination coefficient set that comprises K coefficients.

**13.** A communication method, comprising:

receiving a first sequence, wherein the first sequence is a joint feedback quantity of N pieces of channel information, the N pieces of channel information are determined based on a reference signal in K antenna port groups, N is a positive integer, and K is a positive integer less than or equal to N; and
decompressing the first sequence by using a first decoder, to obtain the N pieces of channel information.

**14.** The method according to claim 13, wherein the first decoder corresponds to a first parameter set, and the first parameter set comprises at least one of the following:

a value of N, joint feedback overheads X, the K antenna port groups corresponding to the N pieces of channel information, or N combination coefficient sets corresponding to the N pieces of channel information, wherein
when the first sequence is a sequence before quantization, the joint feedback overheads are a length of the first sequence; or
when the first sequence is a sequence after quantization, the joint feedback overheads are a quantity of bits of the first sequence, wherein X is a positive integer, and K is a positive integer.

**15.** The method according to claim 14, wherein the first decoder corresponds to at least one first parameter set.

**16.** The method according to any one of claims 13 to 15, wherein a correspondence between the N pieces of channel information and the K antenna port groups is predefined or configured.

**17.** The method according to claim 16, wherein the N pieces of channel information are output from the first decoder in a predefined order and/or in a stacking manner.

**18.** The method according to any one of claims 13 to 17, wherein frequency domain resources of the K antenna port groups comprise one or more same subbands.

**19.** The method according to any one of claims 13 to 18, wherein the K antenna port groups comprise a first antenna port group and a second antenna port group, and a slot offset of time domain resources corresponding to the first antenna port group and the second antenna port group is less than or equal to a first threshold.

**20.** The method according to claim 19, wherein the first threshold is predefined or configured.

**21.** The method according to any one of claims 13 to 20, wherein the N pieces of channel information are functions that are based on K pieces of channel information obtained through measurement by using the K antenna port groups, and the N combination coefficient sets, and each of the N pieces of channel information is a function that is based on the K pieces of channel information and a combination coefficient set that comprises K coefficients.

**22.** The method according to any one of claims 13 to 21, wherein the N pieces of channel information are obtained through calculation based on the K pieces of channel information obtained through measurement by using the K antenna port groups, and the N combination coefficient sets.

**23.** A training method, wherein the method comprises:
obtaining a first training dataset, wherein the first training dataset comprises N pieces of data, the N pieces of data are determined based on a reference signal in K antenna port groups, N is a positive integer, and K is a positive integer less than or equal to N; and
training a first model, wherein the first model comprises a first submodel and a second submodel, an input of the first submodel comprises first training data, an output of the first submodel is an input of the second submodel, the second submodel outputs a second training dataset, the second training dataset indicates the N pieces of data, the output of the first submodel is a first sequence, and the first sequence is a joint feedback quantity of the N pieces of data.

**24.** The method according to claim 23, wherein the first model corresponds to a first parameter set, and the first parameter set comprises at least one of the following: a value of N, joint feedback overheads X, the K antenna port groups corresponding to the N pieces of data, or N combination coefficient sets corresponding to the N pieces of data; and

> when the first sequence is a sequence before quantization, the joint feedback overheads are a length of the first sequence; or
> when the first sequence is a sequence after quantization, the joint feedback overheads are a quantity of bits of the first sequence, wherein X is a positive integer, and K is a positive integer.

**25.** The method according to claim 24, wherein the first model corresponds to at least one first parameter set.

**26.** The method according to any one of claims 23 to 25, wherein the first model corresponds to at least one training dataset, and the first training dataset belongs to the at least one training dataset.

**27.** The method according to any one of claims 23 to 26, wherein a correspondence between the N pieces of data and the K antenna port groups is predefined or configured.

**28.** The method according to any one of claims 23 to 27, wherein the N pieces of data are input to the first model in a predefined order and/or in a stacking manner.

**29.** The method according to any one of claims 23 to 28, wherein frequency domain resources of the K antenna port groups comprise one or more same subbands.

**30.** The method according to any one of claims 23 to 29, wherein the K antenna port groups comprise a first antenna port group and a second antenna port group, and a slot offset of time domain resources corresponding to the first antenna port group and the second antenna port group is less than or equal to a first threshold.

**31.** The method according to any one of claims 23 to 30, wherein the N pieces of data are functions that are based on K pieces of channel information obtained through measurement by using the K antenna port groups, and the N combination coefficient sets, and each of the N pieces of channel information is a function that is based on the K pieces of channel information and a combination coefficient set that comprises K coefficients.

**32.** A communication apparatus, comprising a module or unit configured to perform the method according to any one of claims 1 to 31.

**33.** A computer-readable storage medium, wherein the computer-readable storage medium stores a computer program or instructions, and when the computer program or the instructions are run on a communication apparatus, the communication apparatus is caused to perform the method according to any one of claims 1 to 31.

**34.** A computer program product, wherein the computer program product comprises a computer program or instructions for performing the method according to any one of claims 1 to 31.

**35.** A chip, wherein the chip comprises a processor and a communication interface, and the processor reads, through the communication interface, instructions stored in a memory, to perform the method according to any one of claims 1 to 31.

**36.** A communication system, comprising an encoder and a decoder, wherein the encoder is configured to perform the method according to any one of claims 1 to 12, and the decoder is configured to perform the method according to any one of claims 13 to 22.

FIG. 1

Non-real-time RIC

Access network node

Near-real-time RIC

CU

CU-CP

CU-UP

DU

RU

Terminal

FIG. 2

100

Terminal device 120

Network device 110

Terminal device 130

FIG. 3

200

AI network
element 140

Network
device 110

Terminal
device 120

Terminal
device 130

FIG. 4

V ⟶ Encoder $\xrightarrow{z}$ Decoder ⟶ V'

FIG. 5

Performance
feedback

Data source

Training data ⟶ Model training

Model
deployment/update

Model
feedback

Inference
data ⟶ Model inference ⟶ Output ⟶ Actor
entity

FIG. 6

FIG. 7

FIG. 8

FIG. 9

```
┌──────────────┐                              ┌──────────────┐
│ Transmit end │                              │ Receive end  │
└──────┬───────┘                              └──────┬───────┘
       │                                             │
┌──────┴──────────────────────────────────────┐     │
│ 1010: Obtain N pieces of channel information,│     │
│  where the N pieces of channel information   │     │
│  are determined based on a reference signal  │     │
│  in K antenna port groups, and K is a        │     │
│  positive integer less than or equal to N    │     │
└──────┬───────────────────────────────────────┘     │
       │                                             │
┌──────┴────────────────────────────┐               │
│ 1020: Compress the N pieces of     │               │
│  channel information by using a    │               │
│  first encoder, to obtain a first  │               │
│  sequence                          │               │
└──────┬─────────────────────────────┘              │
       │        1030: First sequence                 │
       │─────────────────────────────────────────────▶│
       │                                             │
       │                        ┌────────────────────┴──────────┐
       │                        │ 1040: Decompress the first    │
       │                        │  sequence by using a first    │
       │                        │  decoder, to obtain the N     │
       │                        │  pieces of channel information│
       │                        └────────────────────┬──────────┘
       │                                             │
```

FIG. 10

EP 4 779 893 A1

$D_2$

$D_1$

$A_2$

$A_1$

W$_1$

W$_2$

W$_3$

W$_N$

Analog beam

⟨⟩ N CSI-RS port combinations

A base station performs sending in time division/ frequency division/code division

A terminal performs measurement and calculation

Beam 1

Beam 2

Beam N

Precoding matrix $v$

FIG. 11(a)

$D_2$

$D_1$

$A_2$

$A_1$

Port 1   $W_1$

Port 2   $W_2$

Port K   $W_K$

Orthogonal beams

⟨⟩ K CSI-RS port combinations

Equivalent channel $h_k$

Synthesize the equivalent channel under an analog beam

$\varphi_1$

$\varphi_2$

$\varphi_3$

$\varphi_L$

$$H_l = \sum_{k=1}^{K^i} \varphi_{l,k} h_k$$

FIG. 11(b)

EP 4 779 893 A1

FIG. 12(a)

FIG. 12(b)

EP 4 779 893 A1

| CSI #N, port #Pn–1 |
| ... |
| CSI #2, port #Pn–1 |
| CSI #1, port #Pn–1 |

| CSI #N, port #Pn–1 |
| ... |
| CSI #2, port #Pn–1 |
| CSI #1, port #Pn–1 |

| CSI #N, port #0 |
| ... |
| CSI #2, port #0 |
| CSI #1, port #0 |

| CSI #N, port #0 |
| ... |
| CSI #2, port #0 |
| CSI #1, port #0 |

Spatial domain

Frequency domain

Subband 0

Subband Q–1

FIG. 12(c)

Spatial
domain

| CSI #N, port #Pn−1 |
| ... |
| CSI #N, port #1 |
| CSI #N, port #0 |

...

| CSI #N, port #Pn−1 |
| ... |
| CSI #N, port #1 |
| CSI #N, port #0 |

.
.
.

.
.
.

| CSI #1, port #Pn−1 |
| ... |
| CSI #1, port #1 |
| CSI #1, port #0 |

...

| CSI #1, port #Pn−1 |
| ... |
| CSI #1, port #1 |
| CSI #1, port #0 |

Frequency
domain

Subband 0

Subband Q−1

FIG. 12(d)

Spatial
domain

Beam domain

Beam 1

Beam 1

...

Frequency
domain

Subband 0

Subband 1

FIG. 12(e)

Network
device

Terminal
device

1310: Reference signal configuration
information and channel information
reporting (or measurement)
configuration information

1320: Send a CSI-RS on a resource
configured by using the reference
signal configuration information

1330: Obtain precoding matrices of N analog beams
based on the CSI-RS and the channel information
reporting configuration information

1340: Select an encoder based on an ID configured
by the network device

1350: Compress the precoding matrices of the
N analog beams

1360: Sequence A

1370: Decompress the sequence A,
to obtain the precoding matrices of
the N analog beams

FIG. 13

Beam 1

Beam 2

.
.
.

Beam N

→ ENC →

x bits
(joint feedback
quantity of the N
beams)

Compression
quantity feedback

⇨

x bits
(joint feedback
quantity of the N
beams)

→ DEC →

Beam 1

Beam 2

.
.
.

Beam N

Precoding
matrix v

FIG. 14

1510: Obtain a first training dataset, where the first training dataset includes N pieces of data, the N pieces of data are determined based on a reference signal in K antenna port groups, N is a positive integer, and K is a positive integer less than or equal to N

1520: A first model includes a first submodel and a second submodel, an input of the first submodel includes the first training dataset, an output of the first submodel is an input of the second submodel, the second submodel outputs a second training dataset, the second training dataset indicates the N pieces of data, the output of the first submodel is a first sequence, and the first sequence is a joint feedback quantity of the N pieces of data

FIG. 15

| Beam 1 |
| Beam 2 |
. . .
| Beam N |

ENC

DEC

Joint feedback quantity X

| Beam 1 |
| Beam 2 |
. . .
| Beam N |

Input precoding matrices of the N beams

Output the precoding matrices of the N beams

FIG. 16

1700

Transceiver unit 1710

Processing unit 1720

FIG. 17

1800

Processing circuit 1810 — Transceiver circuit 1830

Memory 1820

FIG. 18

Chip system 1900

Logic circuit 1910

Input/Output interface 1920

FIG. 19

## INTERNATIONAL SEARCH REPORT

| International application No. |
| --- |
| **PCT/CN2024/121905** |

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

IPC:H04B 7/-、 H04L 5/-、 H04L 25/-

Documentation searched other than minimum documentation to the extent that such documents are included in the fields searched

Electronic data base consulted during the international search (name of data base and, where practicable, search terms used)

CNABS, CNTXT, ENTXTC, CNKI, 百度, BAIDU: 端口组, 参考信号, 信道状态信息, 压缩; VEN, ENTXT, IEEE, 3GPP: port group, RS, reference signal, CSI, feedback, compress

### C. DOCUMENTS CONSIDERED TO BE RELEVANT

| Category* | Citation of document, with indication, where appropriate, of the relevant passages | Relevant to claim No. |
| --- | --- | --- |
| Y | CN 116346545 A (HUAWEI TECHNOLOGIES CO., LTD.) 27 June 2023 (2023-06-27) description, paragraphs [0096]-[0219] | 1-36 |
| Y | CN 106656292 A (CHINA ACADEMY OF TELECOMMUNICATIONS TECHNOLOGY) 10 May 2017 (2017-05-10) description, paragraphs [0106]-[0120] | 1-36 |
| A | CN 114424479 A (QUALCOMM INC.) 29 April 2022 (2022-04-29) entire document | 1-36 |
| A | CN 116112046 A (HUAWEI TECHNOLOGIES CO., LTD.) 12 May 2023 (2023-05-12) entire document | 1-36 |
| A | EP 3855635 A1 (FRAUNHOFER GESELLSCHAFT) 28 July 2021 (2021-07-28) entire document | 1-36 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 December 2024** | **13 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 779 893 A1**

## INTERNATIONAL SEARCH REPORT
### Information on patent family members

| | International application No. |
|---|---|
| | **PCT/CN2024/121905** |

| Patent document cited in search report | | | Publication date (day/month/year) | Patent family member(s) | | | Publication date (day/month/year) |
|---|---|---|---|---|---|---|---|
| CN | 116346545 | A | 27 June 2023 | WO | 2023116808 | A1 | 29 June 2023 |
| | | | | US | 2024348478 | A1 | 17 October 2024 |
| | | | | EP | 4443950 | A1 | 09 October 2024 |
| | | | | KR | 20240118172 | A | 02 August 2024 |
| CN | 106656292 | A | 10 May 2017 | WO | 2017071674 | A1 | 04 May 2017 |
| | | | | US | 2018316405 | A1 | 01 November 2018 |
| | | | | US | 10193609 | B2 | 29 January 2019 |
| | | | | EP | 3370348 | A1 | 05 September 2018 |
| | | | | EP | 3370348 | A4 | 26 June 2019 |
| | | | | EP | 3370348 | B1 | 09 October 2024 |
| | | | | CN | 106656292 | B | 31 March 2020 |
| CN | 114424479 | A | 29 April 2022 | WO | 2021035396 | A1 | 04 March 2021 |
| | | | | EP | 4018687 | A1 | 29 June 2022 |
| | | | | EP | 4018687 | A4 | 31 May 2023 |
| | | | | US | 2022302979 | A1 | 22 September 2022 |
| | | | | CN | 114424479 | B | 26 December 2023 |
| CN | 116112046 | A | 12 May 2023 | WO | 2023082775 | A1 | 19 May 2023 |
| EP | 3855635 | A1 | 28 July 2021 | | None | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311282281X